(19) Europäisches Patentamt
European Patent Office
Office européen des brevets

(11) EP 4 064 404 B1

# (12) EUROPEAN PATENT SPECIFICATION

(45) Date of publication and mention of the grant of the patent:
**29.05.2024 Bulletin 2024/22**

(21) Application number: **21189447.2**

(22) Date of filing: **03.08.2021**

(51) International Patent Classification (IPC):
***H01M 10/0525*** (2010.01) ***H01M 50/403*** (2021.01)
***H01M 50/409*** (2021.01) ***H01M 50/414*** (2021.01)
***H01M 50/426*** (2021.01) ***H01M 50/449*** (2021.01)
***H01M 50/491*** (2021.01) ***H01M 50/494*** (2021.01)

(52) Cooperative Patent Classification (CPC):
**H01M 50/409; H01M 10/0525; H01M 50/403; H01M 50/414; H01M 50/426; H01M 50/449; H01M 50/491; H01M 50/494;** Y02E 60/10

## (54) POLYIMIDE POROUS FILM, NON-AQUEOUS SECONDARY BATTERY SEPARATOR, SECONDARY BATTERY, AND METHOD FOR MANUFACTURING SECONDARY BATTERY

PORÖSER POLYIMIDFILM, WASSERFREIER SEKUNDÄRBATTERIESEPARATOR, SEKUNDÄRBATTERIE UND VERFAHREN ZUR HERSTELLUNG EINER SEKUNDÄRBATTERIE

FILM POREUX POLYIMIDE, SÉPARATEUR DE BATTERIE SECONDAIRE NON AQUEUSE, BATTERIE SECONDAIRE ET PROCÉDÉ DE FABRICATION DE BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2021 JP 2021050361**

(43) Date of publication of application:
**28.09.2022 Bulletin 2022/39**

(73) Proprietor: **Fujifilm Business Innovation Corp.**
**Tokyo (JP)**

(72) Inventors:
- **IWANAGA, Takeshi**
  **Minamiashigara-shi (JP)**
- **SEITOKU, Shigeru**
  **Minamiashigara-shi (JP)**
- **NAKADA, Kosuke**
  **Minamiashigara-shi (JP)**
- **OKUBO, Tomoyo**
  **Minamiashigara-shi (JP)**
- **HIROSE, Hidekazu**
  **Minamiashigara-shi (JP)**

(74) Representative: **Haseltine Lake Kempner LLP**
**Bürkleinstrasse 10**
**80538 München (DE)**

(56) References cited:
**WO-A1-2017/107435**
**CN-U- 207 558 901**
**JP-A- 2017 047 655**
**JP-A- 2017 127 992**
**JP-B2- 5 361 557**
**US-B1- 6 306 989**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

BACKGROUND

Technical Field

The present disclosure relates to a polyimide porous film, a non-aqueous secondary battery separator, a secondary battery, and a method for manufacturing a secondary battery.

Related Art

International Publication No. 2017/026485 discloses a battery separator including a microporous film and a porous layer provided on at least one surface of the microporous film, in which the porous layer contains a vinylidene fluoride-hexafluoropropylene copolymer and an acrylic resin, the vinylidene fluoride-hexafluoropropylene copolymer contains a monomer unit having a hydrophilic group, the hexafluoropropylene monomer unit is contained in an amount of 0.3 mol% or more and 3 mol% or less, and the acrylic resin contains a butyl acrylate monomer unit. As the microporous film, a polyolefin microporous film is exemplified.

Japanese Patent No. 3040757 describes a separator material for a lithium secondary battery in which, in a separator for a lithium secondary battery using a copolymer resin of vinylidene fluoride and hexafluoropropylene (VdF-HFP) as a base material, polymer particles, that are fluorine-based polymer resin particles having a softening point higher than that of the copolymer, are dispersed and mixed.

CN 207558901 describes a polyimide composite lithium battery separator comprising a polyimide porous film and fluorine containing resin particles.

JP 5361557 B2 describes a composite material which is a resin composition having a first and second layer wherein the first layer has a porous surface and the second layer is a fluororesin compound laminated in close contact with the porous surface.

WO 2017/107435 A1 describes a PVDF-coated lithium ion battery separator.

US 6306989 B1 describes the polymerization of fluoropolymers into porous substrates.

JP 2017-127992 A describes a porous film containing a porous polyimide and/or a polyamide-imide film having a low friction surface.

JP 2017-047655 A describes a laminate containing a polyimide and/or a polyamide-imide porous membrane.

SUMMARY

An object of the present disclosure is to provide a polyimide porous film that is excellent in adhesion to an adhesion object and suppresses generation of a deposit, as compared with a polyolefin porous film including a porous layer containing a fluororesin on one surface or both surfaces. The present invention is defined in and by the appended claims.

According to a first aspect of the present invention, there is provided a polyimide porous film including:

a polyimide porous film body, and
resin particles, the resin particles adhering to one surface or both surfaces of the polyimide porous film body, and containing a fluorine-based resin or containing a fluorine-based resin and an acrylic resin, wherein in a case where an average pore diameter of the polyimide porous film body is represented by X and an average particle diameter of the resin particles is represented by Y, a relationship of $X < Y$ is satisfied.

Accordingly, it is possible to provide a polyimide porous film that is excellent in adhesion to an adhesion object and suppresses generation of a deposit, as compared with a polyolefin porous film including a porous layer containing a fluororesin on one surface or both surfaces. Accordingly, it is possible to provide a polyimide porous film that is excellent in adhesion to an adhesion object and suppresses generation of a deposit, as compared with a case where the relationship between the average pore diameter X of the polyolefin porous film body and the average particle diameter Y of the resin particles is $X > Y$

The fluorine-based resin may be a polymer containing a vinylidene fluoride as a polymerization component.

Accordingly, it is possible to provide a polyimide porous film that is excellent in adhesion to a polyimide porous film body and is excellent in adhesion to an adhesion object, as compared with a case where the fluorine-based resin is polytetrafluoroethylene.

The ratio Y/X of the average particle diameter Y of the resin particles to the average pore diameter X of the polyimide porous film body may be more than 1 and equal to or less than 70.0.

Accordingly, it is possible to provide a polyimide porous film that is excellent in adhesion to an adhesion object and suppresses generation of a deposit, as compared with a case where the ratio Y/X is 1 or less or more than 70.0.

The average pore diameter X of the polyimide porous film body may be 50 nm or more and 1500 nm or less.

Accordingly, it is possible to provide a polyimide porous film that is excellent in adhesion to an adhesion object and suppresses generation of a deposit, as compared with a case where the average pore diameter X is less than 50 nm or more than 1500 nm.

The average particle diameter Y of the resin particles may be 5 nm or more and 10 $\mu$m or less.

Accordingly, it is possible to provide a polyimide porous film that is excellent in adhesion to an adhesion object and suppresses generation of a deposit, as compared with a case where the average particle diameter Y is less than 5 nm or more than 10 $\mu$m.

The porosity of the polyimide porous film body may be 50% or more and 90% or less.

Accordingly, it is possible to provide a polyimide porous film suitable for a non-aqueous secondary battery separator in which a secondary battery having excellent mechanical strength and high cycle properties is obtained as compared with a case where the porosity of the polyimide porous film is less than 50% or more than 90%.

The fluorine atom concentration on the surface of the polyimide porous film body to which the resin particles is adhered may be 5 atm% or more and 40 atm% or less.

Accordingly, it is possible to provide a polyimide porous film that is excellent in adhesion to an adhesion object and suppresses generation of a deposit as compared with a case where the fluorine atom concentration on the surface of the polyimide porous film body to which the resin particles is adhered is less than 5 atm%.

According to the present disclosure, there is provided (though not claimed) a polyimide porous film, including: a polyimide porous film body,

at least one of resin particles and a resin porous film, the at least one of the resin particles and the resin porous film adhering to one surface or both surfaces of the polyimide porous film body and containing a resin other than a polyimide resin,
in which a water contact angle of the surface of the polyimide porous film to which the at least one of the resin particles and the resin porous film is adhered is 80° or more and 120° or less.

According to a second aspect of the present invention, there is provided a non-aqueous secondary battery separator including: the polyimide porous film according to the first aspect of the present invention.

According to a third aspect of the present invention, there is provided a secondary battery including: an electrode; and the non-aqueous secondary battery separator according to the second aspect of the present invention, in which an adhesive layer is formed between the electrode and the polyimide porous film body by the resin particles.

According to a fourth aspect of the present invention, there is provided a method for manufacturing a secondary battery, including adhering the non-aqueous secondary battery separator according to the second aspect of the present invention and an electrode by the resin particles.

Accordingly, it is possible to provide a non-aqueous secondary battery separator that is excellent in adhesiveness to an electrode and suppresses generation of a deposit, as compared with a non-aqueous secondary battery separator that is formed of a polyolefin porous film including a porous layer containing a fluororesin on one surface or both surfaces.

Accordingly, it is possible to provide a secondary battery that is excellent in adhesiveness to an electrode and suppresses generation of a deposit, or a method for manufacturing the secondary battery, as compared with a secondary battery including a non-aqueous secondary battery separator that is formed of a polyolefin porous film including a porous layer containing a fluororesin on one surface or both surfaces.

## BRIEF DESCRIPTION OF THE DRAWINGS

Exemplary embodiment(s) of the present invention will be described in detail based on the following figure, wherein:
FIGURE is a schematic partial cross-sectional diagram showing an example of a secondary battery (lithium ion secondary battery) according to a present disclosure.

## DETAILED DESCRIPTION

Hereinafter, an exemplary embodiment of the present disclosure will be described. These descriptions and Examples illustrate the exemplary embodiment, and do not limit the scope of the exemplary embodiment.

In the present disclosure, a numerical range indicated by "to" indicates a range including numerical values before and after "to" as a minimum value and a maximum value, respectively.

In numerical ranges described in stages in the present disclosure, an upper limit or a lower limit described in one numerical range may be replaced with an upper limit or a lower limit of a numerical range described in other stages. In the numerical ranges described in the present disclosure, the upper limit or the lower limit of the numerical range may be replaced with values shown in Examples.

In the present disclosure, the term "step" indicates not only an independent step, and even when a step cannot be clearly distinguished from other steps, this step is included in the term "step" as long as an intended purpose of the step is achieved.

When an exemplary embodiment is described in the present disclosure with reference to the drawings, a configuration of the exemplary embodiment is not limited to a configuration illustrated in the drawings. Sizes of members in each drawing are conceptual, and a relative size relation between the members is not limited thereto.

In the present disclosure, each component may include plural corresponding substances. In the present disclosure, in a case of referring to an amount of each component in a composition, when there are plural substances corresponding to each component in the composition, unless otherwise specified, the amount of each component in a composition refers to a total amount of the plural substances present in the composition.

In the present disclosure, the term "(meth)acryl" means either "acryl" or "methacryl".

<Polyimide Porous Film>

In order to improve the adhesion between the polyolefin porous film and another material (also referred to as an adhesion object), there is a method of applying particles containing a fluororesin to an interface between the polyolefin porous film and another material. The polyolefin porous film used in the method may be melted when the temperature becomes high (for example, 150°C or higher), and the function as a porous film may be impaired.

On the other hand, the polyimide porous film is a film that is hard and excellent in heat resistance due to the polyimide resin. Therefore, unlike the polyolefin porous film, it is difficult to dissolve even at a high temperature as described above. However, since the polyimide porous film has a hardness, the polyimide porous film may be inferior in adhesion to other materials, and a gap may be formed between the polyimide porous film and another material. Although the porous film has a function of allowing a substance such as an ion to pass therethrough, when a gap is formed between the polyimide porous film and another material, a substance passing through the polyimide porous film may be deposited in the gap to generate a deposit.

A first exemplary embodiment of a polyimide porous film according to the present invention includes: a polyimide porous film body; and resin particles adhering to one surface or both surfaces of the polyimide porous film body and containing a fluorine-based resin or containing a fluorine-based resin and an acrylic resin.

Here, the "resin particles containing a fluorine-based resin or containing a fluorine-based resin and an acrylic resin" contained in the polyimide porous film according to the present disclosure are also referred to as "fluorine-containing resin particles". In addition, there is described herein though not claimed a " resin porous film containing a fluorine-based resin or containing a fluorine-based resin and an acrylic resin" included in the polyimide porous film according to the present disclosure which is also referred to as a "fluorine-containing resin porous film".

A second embodiment of the polyimide porous film according to the present disclosure (which is not claimed) includes: a polyimide porous film body; and at least one of resin particles and a resin porous film adhering to one surface or both surfaces of the polyimide porous film body and containing a resin other than the polyimide resin, in which a water contact angle of a surface of the polyimide porous film to which at least one of the resin particles and the resin porous film is adhered is 80° or more and 120° or less.

In the present disclosure, unless otherwise specified, the "polyimide porous film according to the present disclosure" refers to both the first exemplary embodiment and the second embodiment.

As described above, the polyimide porous film according to the presentinvention is provided with the resin particles on one surface or both surfaces of the polyimide porous film body. It is considered that the adhesion between the polyimide porous film body and the other material (that is, the adhesion object) is enhanced from the presence of the resin particles. As a result, it is presumed that a gap formed between the polyimide porous film body and the other material is less likely to be formed, and the generation of the deposit of the substances passing through the polyimide porous film that is formed in the formed gap can be suppressed. In particular, by using the polyimide porous film according to the present invention, the resin particles present at the interface between the polyimide porous film body and the other material. As described above, the resin particles contain a fluorine-based resin and optionally have a water contact angle of 80° or more and 120° or less. As a result, it is also presumed that, at the interface between the polyimide porous film body and the other material in which the resin particles are present, the substance passing through the polyimide porous film is less likely to stay, and the generation of the deposit can be suppressed.

In the polyimide porous film according to the present invention, when the average pore diameter of the polyimide porous film body is represented by X and the average particle diameter of the resin particles (fluorine-containing resin particles in the case of the first exemplary embodiment) is represented by Y, the relationship of $X<Y$ is satisfied.

In an embodiment in which the average particle diameter Y of the resin particles is larger than the average pore diameter X of the polyimide porous film body, it is possible to prevent the resin particles from being embedded in the opening of the polyimide porous film body. As a result, in the polyimide porous film of this aspect, the adhesion to the adhesion object is further improved, and the generation of the deposit is further suppressed.

Here, the average particle diameter of the resin particles means the volume average particle diameter D50v of the resin particles.

In the polyimide porous film according to the present disclosure, the ratio Y/X of the average particle diameter Y of the resin particles (fluorine-containing resin particles in the case of the first exemplary embodiment) to the average pore diameter X of the polyimide porous film body is preferably more than 1 and 70.0 or less, more preferably more than 1 and 65.0 or less, still more preferably more than 1 and 60.0 or less, and particularly preferably more than 1 and 55.0 or less.

When Y/X is more than 1, the resin particles can be more effectively prevented from being embedded in the openings of the polyimide porous film. When Y/X is 70.0 or less, formation of gaps between the polyolefin porous film body and the adhesion object due to coarse particles is suppressed. As a result, in the polyimide porous film of this aspect, the adhesion to the adhesion object is further improved, and the generation of the deposit is further suppressed.

In the polyimide porous film according to the present invention, the fluorine atom concentration on the surface of the polyimide porous film body to which the resin particles are adhered is preferably 5 atm% or more and 40 atm% or less, more preferably 8 atm% or more and 35 atm% or less, and still more preferably 10 atm% or more and 30 atm% or less.

The fluorine atom concentration is an index of the adhesion amount of the resin particles. In the polyimide porous film in which the fluorine atom concentration is in the above range, the adhesion to the adhesion object is further improved, and the generation of the deposit is further suppressed.

The measurement of the fluorine atom concentration on the surface of the polyimide porous film body to which the resin particles are adhered is performed by X-ray Photoelectron Spectroscopy (XPS).

Specifically, an X-ray photoelectron spectrometer (JPS-9000MX manufactured by JEOL Ltd.) is used, MgK$\alpha$ ray is used as an X-ray source, an acceleration voltage is set to 10 kV, and an emission current is set to 20 mA, and the surface of the polyimide porous film to be measured is analyzed. From the analysis result, the fluorine atom fraction (atm%) with respect to the total amount of atoms of all the elements is calculated, and the fluorine atom fraction is defined as the fluorine atom concentration.

Hereinafter, the fluorine-containing resin particles in the first exemplary embodiment of the polyolefin porous film according to the present disclosure will be described. The fluorine-containing resin porous film is also described though is not claimed.

[Fluorine-Containing Resin Particles and Fluorine-Containing Resin Porous Film]

The first exemplary embodiment of the polyolefin porous film according to the present invention includes resin particles (that is, fluorine-containing resin particles) adhering to one surface or both surfaces of a polyimide porous film body and containing a fluorine-based resin, or containing a fluorine-based resin and an acrylic resin.

[Fluorine-Containing Resin Particles]

The fluorine-containing resin particles contain a fluorine-based resin, or contain a fluorine-based resin and an acrylic resin.

The fluorine-based resin contained in the fluorine-containing resin particles is not particularly limited, and examples thereof include a polymer containing tetrafluoroethylene as a polymerization component, a polymer containing vinylidene fluoride as a polymerization component, a polymer containing trifluorochloroethylene as a polymerization component, polyvinyl fluoride (PVF) or the like.

Examples of the polymer containing tetrafluoroethylene as a polymerization component include polytetrafluoroethylene (PTFE), tetrafluoroethylene-perfluoroalkyl vinyl ether copolymer (PFA), tetrafluoroethylene-hexafluoropropylene copolymer (FEP), tetrafluoroethylene-ethylene copolymer (ETFE), or the like.

Examples of the polymer containing vinylidene fluoride as a polymerization component include polyvinylidene fluoride (PVDF) and vinylidene fluoride-hexafluoropropylene copolymer (VDF-HFP).

Examples of the polymer containing trifluorochloroethylene as a polymerization component include polytrifluorochloroethylene (PCTFE) and trifluorochloroethylene-ethylene polymer (ECTFE).

The fluorine-based resin is preferably a polymer containing vinylidene fluoride as a polymerization component from the viewpoint of adhesion to an adhesion object, from the viewpoint of suppressing generation of a deposit, from the viewpoint of production suitability, and from the viewpoint of excellent adhesion to a polyimide porous film body.

The weight average molecular weight of the fluorine-based resin is preferably 10,000 or more and 200,000 or

less, more preferably 20,000 or more and 140,000 or less, and still more preferably 60,000 or more and 100,000 or less, from the viewpoint of improving adhesion to an adhesion object and suppressing generation of a deposit.

The number average molecular weight of the fluorine-based resin is preferably 5,000 or more and 180,000 or less, and more preferably 20,000 or more and 100,000 or less, from the viewpoint of improving the adhesion to an adhesion object and suppressing the generation of a deposit.

In the present disclosure, the weight average molecular weight (also referred to as "Mw") of the fluorine-based resin is measured by gel permeation chromatography (GPC). The molecular weight measurement by GPC is performed using HLC-8120GPC manufactured by Tosoh Corporation as a GPC apparatus, TSKgel Super HM-M (15 cm) manufactured by Tosoh Corporation as a column, and N, N-dimethylformamide as a solvent. The weight average molecular weight of the resin is calculated using a molecular weight calibration curve created by a monodisperse polystyrene standard sample.

In the case of a fluorine-based resin (for example, PTFE or the like) that does not dissolve or hardly dissolve in a solvent, the number average molecular weight is obtained by the following method.

That is, the number average molecular weight of the fluorine-based resin is determined by measuring the amount of heat of crystallization (ΔHc) using a differential scanning calorimeter (DSC) and substituting the value into the following formula (A).

$$\cdot \text{ Formula (A)} \qquad \text{Number average molecular weight (Mn)} = 2.1 \times 10^{10} \times \Delta Hc^{-5.16}$$

Examples of the acrylic resin contained in the fluorine-containing resin particles include a polymer containing a (meth)acrylic monomer as a polymerization component. Examples of the (meth)acrylic monomer include at least one selected from the group consisting of (meth)acrylic acid and (meth)acrylic acid ester.

The acrylic resin preferably contains a (meth)acrylic monomer in an amount of 50 mass% or more, more preferably 80 mass% or more, and even more preferably 100 mass% or more, based on the total amount of the polymerization component.

Here, the term "acrylic resin" is a concept including both an acrylic resin and a methacrylic resin.

Examples of the (meth)acrylic acid that is one of the (meth)acrylic monomers include, in addition to the (meth)acrylic acid, salts thereof such as sodium (meth)acrylate and calcium (meth)acrylate.

The (meth)acrylic acid ester that is one of the (meth)acrylic monomers is preferably an alkyl (meth)acrylate.

Examples of the alkyl (meth)acrylate include methyl (meth)acrylate, ethyl (meth)acrylate, propyl (meth)acrylate, isopropyl (meth)acrylate, n-butyl (meth)acrylate, isobutyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, and isobornyl (meth)acrylate or the like. In addition, examples of the alkyl (meth)acrylate include 2-carboxyethyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 2-methoxyethyl (meth)acrylate, or the like.

The weight average molecular weight of the acrylic resin is preferably 60,000 or more and 1,000,000 or less, more preferably 50,000 or more and 300,000 or less, and still more preferably 20,000 or more and 200,000 or less, from the viewpoint of improving adhesion to an adhesion object and from the viewpoint of suppressing generation of a deposit.

The fluorine-containing resin particles contain a fluorine-based resin, or both a fluorine-based resin and an acrylic resin.

In the fluorine-containing resin particles, each of the fluorine-based resin and the acrylic resin may be used alone or in combination of two or more thereof.

When the fluorine-containing resin particles contain both a fluorine-based resin and an acrylic resin, the amount ratio (a mass of the fluorine-based resin: a mass of the acrylic resin) of the fluorine-based resin to the acrylic resin is preferably from 2: 98 to 20: 80, more preferably from 5: 95 to 15: 85, and still more preferably from 7: 93 to 13: 87 on a mass basis.

The content of the fluorine-based resin and the acrylic resin in the fluorine-containing resin particles is preferably 50 mass% or more and 100 mass% or less, more preferably 70 mass% or more and 100 mass% or less, and still more preferably 90 mass% or more and 100 mass% or less with respect to the total mass of the fluorine-containing resin particles, from the viewpoint of improving the adhesion to an adhesion object and from the viewpoint of suppressing the generation of a deposit.

(Additives)

The fluorine-containing resin particles may contain various additives in a range that is excellent in adhesion to an adhesion object and does not impair the effect of suppressing the generation of a deposit.

Examples of the additive include resins other than the fluorine-based resin and the acrylic resin, colorants (for

example, pigments and dyes), release agents (for example, hydrocarbon waxes; natural waxes such as carnauba wax, rice wax, and candelilla wax; synthetic waxes or mineral or petroleum waxes such as montanic wax; ester waxes such as fatty acid esters and montanic acid esters); charge controlling agents; or the like.

The content of the additive is preferably 10 mass% or less, and more preferably 5 mass% or less, with respect to the total mass of the fluorine-containing resin particles.

The volume average particle diameter D50v of the fluorine-containing resin particles, that is, the average particle diameter Y of the fluorine-containing resin particles is preferably 5 nm or more and 10 μm or less, more preferably 10 nm or more and 1.0 μm or less, and still more preferably 50 nm or more and 0.5 μm or less, from the viewpoint of ease of manufacture and ease of availability, from the viewpoint of improving adhesion to an adhesion object, and from the viewpoint of suppressing generation of a deposit.

The volume average particle diameter D50v of the fluorine-containing resin particles is measured using an aperture having an aperture diameter of 100 μm and a Coulter Multisizer II (manufactured by Brookman Coulter). Fluorine-containing resin particles of 0.5 mg or more and 50 mg or less are added to 2 mL of a 5 mass% aqueous solution of sodium alkylbenzene sulfonate and dispersed, then mixed with an electrolytic solution (ISOTON-II, manufactured by Beckman Coulter) of 100 mL or more and 150 mL or less, and the dispersion treatment is performed for 1 minute with an ultrasonic disperser, and the obtained dispersion liquid is used as a sample. The particle diameter of 50,000 particles having a particle diameter of 2 μm or more and 60 μm or less in the sample is measured. The particle diameter corresponding to the cumulative percentage of 50% in the volume-based particle size distribution starting from the small diameter side is referred to as a volume average particle diameter D50v.

(Method for Manufacturing Fluorine-Containing Resin Particles)

The fluorine-containing resin particles may be manufactured by a conventionally known method for manufacturing resin particles.

Examples of the method for manufacturing the fluorine-containing resin particles include a dry preparing method (for example, a kneading and pulverizing method), a wet preparing method (for example, an aggregation and coalescence method, a suspension polymerization method, a dissolution suspension method, and an emulsion polymerization method).

As the fluorine-containing resin particles, a commercially available product may be used.

[Fluorine-Containing Resin Porous Film] (not claimed)

The fluorine-containing resin porous film contains a fluorine-based resin, or contains a fluorine-based resin and an acrylic resin.

The fluorine-based resin and the acrylic resin contained in the fluorine-containing resin porous film have the same meaning as the fluorine-based resin and the acrylic resin contained in the fluorine-containing resin particles described above, and preferred embodiments thereof are also the same.

The additives contained in the fluorine-containing resin porous film are also the same as the additives contained in the fluorine-containing resin particles described above, and preferred embodiments are also the same.

The thickness of the fluorine-containing resin porous film is preferably 2 μm or more and 500 μm or less, and more preferably 5 μm or more and 100 μm or less.

Here, the thickness of the fluorine-containing resin porous film is measured by the same method as the average film thickness of the polyimide porous film described later.

(Manufacturing of Fluorine-Containing Resin Porous Film)

The method for manufacturing the fluorine-containing resin porous film is not particularly limited as long as the method is a method capable of manufacturing a porous film containing a fluorine-based resin or containing a fluorine-based resin and an acrylic resin.

The fluorine-containing resin porous film may be formed by, for example, applying the above-described fluorine-containing resin particles to the surface of the polyimide porous film body and heating the applied fluorine-containing resin particles to partially fuse the fluorine-containing resin particles to each other. In order to fuse the fluorine-containing resin particles to each other, pressurization may be performed in addition to heating.

Only the fluorine-containing resin particles may be present on one surface or both surfaces of the polyimide porous film body, only the fluorine-containing resin porous film may be present, or the fluorine-containing resin particles and the fluorine-containing resin porous film may be mixed.

In the first exemplary embodiment of the polyimide porous film according to the present invention, the water contact angle of the surface of the polyimide porous film to which the fluorine-containing resin particles are adhered is

preferably 80° or more and 120° or less, more preferably 85° or more and 110° or less, and still more preferably 90° or more and 110° or less.

Here, the water contact angle is measured by the same method as the water contact angle in a second embodiment of the polyimide porous film according to the present disclosure, which will be described later.

Next, the details of the resin particles and the resin porous film and the water contact angle in the second embodiment of the polyimide porous film according to the present disclosure will be described.

[Resin Particles and Resin Porous Film]

A second embodiment of the polyimide porous film according to the present disclosure includes at least one of resin particles and a resin porous film adhering to one surface or both surfaces of a polyimide porous film body and containing a resin other than a polyimide resin. The water contact angle of the surface of the polyimide porous film body to which at least one of the resin particles and the resin porous film is adhered is 80° or more and 120° or less.

That is, in the second embodiment of the polyimide porous film according to the present disclosure, the water contact angle of the surface of the polyimide porous film to which at least one of the resin particles and the resin porous film containing the resin other than the polyimide resin is adhered is 80° or more and 120° or less.

[Water Contact Angle]

In the second embodiment of the polyimide porous film according to the present disclosure, the water contact angle of the surface of the polyimide porous film body to which at least one of the resin particles and the resin porous film adhered is preferably 85° or more and 110° or less, and more preferably 90° or more and 110° or less.

Here, the water contact angle is measured at 23°C using a contact angle meter (model number: CA-X Model, manufactured by Kyowa Interface Science Co., Ltd.) after 1 minute by dropping 1 μl of water droplets on the surface of the polyimide porous film to which at least one of the resin particles and the resin porous film is adhered.

(Resin Particles)

The resin contained in the resin particles is a resin other than the polyimide resin, and may be used without any limitation as long as the water contact angle of the surface of the polyimide porous film to which the resin particles are adhered is capable of achieving the above-described numerical range.

The resin particles are preferably resin particles containing a fluorine-based resin or containing a fluorine-based resin and an acrylic resin. That is, the resin particles in the second embodiment of the polyimide porous film according to the present disclosure are preferably the fluorine-containing resin particles in the first exemplary embodiment of the polyimide porous film according to the present invention, and a preferred embodiment and a manufacturing method are the same as those of the fluorine-containing resin particles.

(Resin Porous Film)

The resin contained in the resin porous film is a resin other than the polyimide resin, and may be used without any limitation as long as the water contact angle of the surface of the polyimide porous film to which the resin porous film is adhered is capable of achieving the above-described numerical range.

The resin porous film is preferably a resin porous film containing a fluorine-based resin or containing a fluorine-based resin and an acrylic resin. That is, the resin porous film in the second embodiment of the polyimide porous film according to the present disclosure is preferably a fluorine-containing resin porous film in the first exemplary embodiment of the polyimide porous film according to the present invention, and a preferred embodiment and a manufacturing method are the same as those of the fluorine-containing resin porous film.

Next, the polyimide porous film body in the polyimide porous film according to the present disclosure will be described in detail.

[Polyimide Porous Film Body]

The polyimide porous film according to the present disclosure has a polyimide porous film body.

It is preferable that the polyimide porous film body has plural pores, and most of the plural pores are connected to each other to form a state in which both surfaces of the polyimide porous film body communicate with each other.

Hereinafter, physical properties of the polyimide porous film body will be described.

(Porosity and Air Permeability)

In the polyimide porous film body according to the present exemplary embodiment, the porosity is preferably 50% or more and 90% or less, and the air permeability is preferably 5 seconds/100 mL or more and 100 seconds/100 mL or less, from the viewpoint of the ability to pass the substance in the porous film.
When the polyimide porous film body has the porosity and the air permeability described above, the cycle properties can be improved when the polyimide porous film according to the present disclosure is applied to the non-aqueous secondary battery separator.
The porosity of the polyimide porous film body is preferably 50% or more and 90% or less, and more preferably 55% or more and 85% or less.
The porosity of the polyimide porous film body is determined from the apparent density and true density of the polyimide porous film body.
The apparent density d is a value obtained by dividing the mass (g) of the polyimide porous film body by the volume ($cm^3$) of the polyimide porous film body including the pores. The apparent density d may be obtained by dividing the mass ($g/m^2$) of the polyimide porous film body per unit area of the polyimide porous film body by the thickness ($\mu m$) of the polyimide porous film body. The true density $\rho$ is a value obtained by dividing the mass (g) of the polyimide porous film body by the volume of the polyimide porous film body excluding the pores (that is, the volume of only the skeleton portion of the resin) ($cm^3$).
The porosity of the polyimide porous film body is calculated by the following formula (1).

$$\cdot\text{Formula (1)} \qquad \text{Porosity (\%)} = \{1 - (d/\rho)\} \times 100 = [1 - \{(w/t)/\rho\}] \times 100$$

d: apparent density ($g/cm^3$) of the polyimide porous film body
$\rho$: true density ($g/cm^3$) of the polyimide porous film body
w: mass per unit area of the polyimide porous film body ($g/m^2$)
t: thickness ($\mu m$) of the polyimide porous film body

The air permeability of the polyimide porous film body is preferably 5 seconds/100 mL or more and 100 seconds/100 mL or less, and more preferably 5 seconds/100 mL or more and 80 seconds/100 mL or less.
The air permeability of the polyimide porous film body is measured by the air permeability test method of Gurley method (JIS P8117: 2009).

(Average Pore Diameter)

The average pore diameter X of the polyimide porous film body is preferably 50 nm or more and 1500 nm or less, and more preferably 50 nm or more and 1000 nm or less, from the viewpoint of the ability to pass the substance in the porous film.
When the polyimide porous film body has the above-described average pore diameter, the cycle properties can be improved when the polyimide porous film according to the present disclosure is applied to a non-aqueous secondary battery separator.
The average pore diameter in the polyimide porous film body is obtained from values observed and measured by a scanning electron microscope (SEM) in a cross section in the thickness direction of the polyimide porous film body. Although the pores in the polyimide porous film body are connected with each other, the pores are regarded as independent pores, and the pore diameter is obtained.
Here, observation and measurement will be described in detail with a scanning electron microscope (SEM).
First, the polyimide porous film body is cut out in the thickness direction, and a measurement sample having a cut surface as a measurement surface is prepared. Then, the measurement sample is observed and measured by VE SEM manufactured by KEYENCE CORPORATION using image processing software included in the VE SEM as standard. The measurement of the long diameter and the short diameter of the pores is performed for 100 pores in the cross section of the measurement sample.
Here, the long diameter of the pore refers to the length of the long side of the circumscribed rectangle of the pore, and the short diameter of the pore refers to the length of the short side of the circumscribed rectangle of the pore.
The average value of the long diameters of 100 pores is referred to as an "average pore diameter X" in the present exemplary embodiment.

(Average Flatness)

The average flatness of the polyimide porous film body is preferably 0.1 or more and 0.7 or less, more preferably 0.2 or more and 0.7 or less, and still more preferably 0.2 or more and 0.6 or less, from the viewpoint of improving the strength of the film.

The average flatness of the polyimide porous film body is obtained from the following formula (2) based on the values of the long diameter and the short diameter obtained by the above measurement. Then, an average value of the flatness of 100 pores is referred to as an "average flatness" in the present exemplary embodiment.

·Formula (2) Flatness = (long diameter - short diameter)/long diameter

(Tensile Breaking Strength)

The tensile breaking strength of the polyimide porous film body is preferably 10 MPa or more, and more preferably 15 MPa or more, due to the strength of the polyimide resin.

In particular, the tensile breaking strength is preferably achieved in a polyimide porous film body having a porosity in a range of 50% or more and 90% or less.

The tensile breaking strength in the polyimide porous film body is measured as follows.

First, a strip-shaped measurement sample having a width of 5 mm, a length of 100 mm, and a thickness of 100 μm is prepared.

Using Strograph VE-1D (manufactured by Toyoseiki Co., Ltd.), a strip-shaped measurement sample is pulled under the following conditions, and the tensile breaking strength is calculated from the stress (that is, load/cross-sectional area) at break of the measurement sample.

·Chuck-to-chuck distance: 50 mm
·Tensile speed: 500 mm/min
·Temperature: 23°C
·Relative humidity: 55%

(Average Film Thickness)

The average film thickness of the polyimide porous film body, that is, the thickness of the polyimide porous film body is not particularly limited, and is selected according to the application.

The average film thickness of the polyimide porous film body may be, for example, 10 μm or more and 1000 μm or less. The average film thickness of the polyimide porous film body is preferably 20 μm or more, and more preferably 30 μm or more. The average film thickness of the polyimide porous film body is preferably 500 μm or less, and more preferably 400 μm or less.

The average film thickness of the polyimide porous film body is obtained by observing the cross section in the thickness direction with a scanning electron microscope (SEM) at 10 places, measuring the film thickness of each observation place from the 10 SEM images, and averaging the obtained 10 measurement values (that is, film thicknesses).

(Method for Manufacturing Polyimide Porous Film Body)

The polyimide porous film body is preferably manufactured through, for example, the following steps.

That is, examples thereof include a step of applying a polyimide precursor solution containing a polyimide precursor, particles, and a solvent onto a substrate to form a coating film, and then drying the coating film to form a film containing the polyimide precursor and the resin particles (hereinafter, also referred to as a first step), a step of removing the particles from the film (hereinafter also referred to as a second step), a step of heating the film to imidize the polyimide precursor in the film (hereinafter also referred to as a third step), or the like.

Hereinafter, each step will be described.

[First Step]

In the first step, a polyimide precursor solution containing a polyimide precursor, resin particles, and a solvent is applied onto a substrate to form a coating film, and then the coating film is dried to form a film containing the polyimide precursor and the resin particles.

[Polyimide Precursor Solution]

(Polyimide Precursor)

The polyimide precursor solution used in the first step contains a polyimide precursor.

The polyimide precursor is preferably a resin having a repeating unit represented by general formula (I).

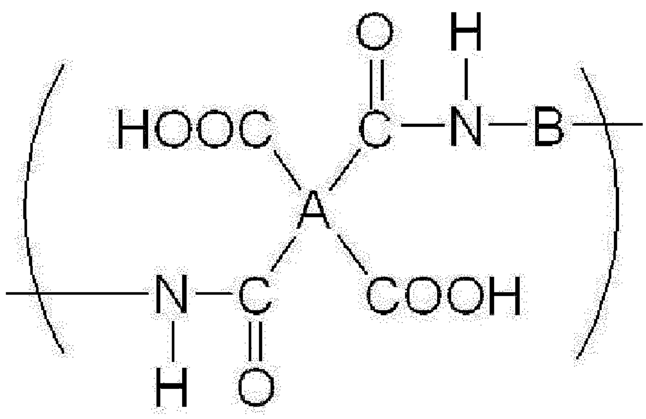

(I)

In the general formula (I), A represents a tetravalent organic group and B represents a divalent organic group.

Here, in the general formula (I), the tetravalent organic group represented by A is a residue obtained by removing four carboxyl groups from a tetracarboxylic dianhydride as a raw material.

On the other hand, the divalent organic group represented by B is a residue obtained by removing two amino groups from a diamine compound as a raw material.

That is, the polyimide precursor having a repeating unit represented by the general formula (I) is a polymer of a tetracarboxylic dianhydride and a diamine compound.

Examples of the tetracarboxylic dianhydride include both aromatic and aliphatic tetracarboxylic dianhydrides, and the aromatic tetracarboxylic dianhydride is preferred. That is, in the general formula (I), the tetravalent organic group represented by A is preferably an aromatic organic group.

Examples of the aromatic tetracarboxylic dianhydride include pyromellitic dianhydride, 3,3',4,4'-benzophenone tetracarboxylic dianhydride, 3,3',4,4'-biphenylsulfonetetracarboxylic dianhydride, 1,4,5,8-naphthalenetetracarboxylic dianhydride, 2,3,6,7-naphthalenetetracarboxylic dianhydride, 3,3',4,4'-biphenyl ether tetracarboxylic dianhydride, 3,3',4,4'-dimethyldiphenylsilanetetracarboxylic dianhydride, 3,3',4,4'-tetraphenylsilanetetracarboxylic dianhydride, 1,2,3,4-frantetracarboxylic dianhydride, 4,4'-bis(3,4-dicarboxyphenoxy)diphenylsulfide dianhydride, 4,4'-bis(3,4-dicarboxyphenoxy)diphenylsulfone dianhydride, 4,4'-bis(3,4-dicarboxyphenoxy)diphenylpropane dianhydride, 3,3',4,4'-perfluoroisopropyridene diphthalic dianhydride, 3,3',4,4'-biphenyltetracarboxylic dianhydride, 2,3,3',4'-biphenyltetracarboxylic dianhydride, bis(phthalic acid) phenylphosphine oxide dianhydride, p-phenylene-bis(triphenylphthalic acid)dianhydride, m-phenylene-bis(triphenylphthalic acid)dianhydride, bis(triphenylphthalic acid)-4,4'-diphenyl ether dianhydride, and bis(triphenylphthalic acid)-4,4'-diphenylmethane dianhydride.

Examples of the aliphatic tetracarboxylic dianhydride include: aliphatic or alicyclic tetracarboxylic dianhydrides such as butanetetracarboxylic dianhydride, 1,2,3,4-cyclobutanetetracarboxylic dianhydride, 1,3-dimethyl-1,2,3,4-cyclobutanetetracarboxylic dianhydride, 1,2,3,4-cyclopentanetetracarboxylic dianhydride, 2,3,5-tricarboxycyclopentyl acetate dianhydride, 3,5,6-tricarboxynorbonan-2-acetate dianhydride, 2,3,4,5-tetrahydrofuran tetracarboxylic dianhydride, 5-(2,5-dioxotetrahydrofuryl)-3-methyl-3-cyclohexene-1,2-dicarboxylic acid dianhydride, and bicyclo[2,2,2]-octo-7-ene-2,3,5,6-tetracarboxylic dianhydride; and aliphatic tetracarboxylic dianhydrides having an aromatic ring such as 1,3,3a,4,5,9b-hexahydro-2,5-dioxo-3-franyl)-naphtho[1,2-c]furan-1,3-dione, 1,3,3a,4,5,9b-hexahydro-5-methyl-5-(tetrahydro-2,5-dioxo-3-franyl)-naphtho[1,2-c]furan-1,3-dione, and 1,3,3a,4,5,9b-hexahydro-8-methyl-5-(tetrahydro-2,5-dioxo-3-franyl)-naphtho[1,2-c]furan-1,3-dione.

Among these, the tetracarboxylic dianhydride is preferably an aromatic tetracarboxylic dianhydride. Specifically, preferred are pyromellitic dianhydride, 3,3',4,4'-biphenyltetracarboxylic dianhydride, 2,3,3',4'-biphenyltetracarboxylic dianhydride, 3,3',4,4'-biphenyl ether tetracarboxylic dianhydride, and 3,3',4,4'-benzophenone tetracarboxylic dianhydride,

more preferred are pyromellitic dianhydride, 3,3',4,4'-biphenyltetracarboxylic dianhydride, and 3,3',4,4'-benzophenone tetracarboxylic dianhydride, and particularly preferred is 3,3',4,4'-biphenyltetracarboxylic dianhydride.

The tetracarboxylic dianhydride may be used alone or in combination of two or more thereof.

When two or more tetracarboxylic dianhydrides are used in combination, aromatic tetracarboxylic dianhydrides or aliphatic tetracarboxylic acids may be used in combination, or an aromatic tetracarboxylic dianhydride and an aliphatic tetracarboxylic dianhydride may be used in combination.

On the other hand, the diamine compound is a diamine compound having two amino groups in the molecular structure thereof. Examples of the diamine compound include both aromatic and aliphatic diamine compounds, and the aromatic diamine compound is preferred. That is, in the general formula (I), the divalent organic group represented by B is preferably an aromatic organic group.

Examples of the diamine compound include: aromatic diamines such as p-phenylenediamine, m-phenylenediamine, 4,4'-diaminodiphenylmethane, 4,4'-diaminodiphenylethane, 4,4'-diaminodiphenyl ether, 4,4'-diaminodiphenyl sulfide, 4,4'-diaminodiphenyl sulfone, 1,5-diaminonaphthalene, 3,3-dimethyl-4,4'-diaminobiphenyl, 5-amino-1-(4'-aminophenyl)-1,3,3-trimethylindane,6-amino-1-(4'-aminophenyl)-1,3,3-trimethylindane, 4,4'-diaminobenzanilide, 3,5-diamino-3'-trifluoromethylbenzanilide, 3,5-diamino-4'-trifluoromethylbenzanilide, 3,4'-diaminodiphenyl ether, 2,7-diaminofluorene, 2,2-bis(4-aminophenyl)hexafluoropropane, 4,4'-methylene-bis (2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 4,4'-diamino-2,2'-bis(trifluoromethyl)biphenyl, 2,2-bis[4-(4-aminophenoxy) phenyl] propane, 2,2-bis[4-(4-aminophenoxy) phenyl]hexafluoropropane, 1,4-bis (4-aminophenoxy)benzene, 4,4'-bis(4-aminophenoxy)-biphenyl, 1,3'-bis (4-aminophenoxy) benzene, 9,9-bis(4-aminophenyl)fluorene, 4,4'-(p-phenylene isopropylidene)bisaniline, 4,4'-(m-phenylene isopropylidene)bisaniline, 2,2'-bis[4-(4-amino-2-trifluoromethylphenoxy)phenyl]hexafluoropropane, and 4,4'-bis[4-(4-amino-2-trifluoromethyl)phenoxy]-octafluorobiphenyl; aromatic diamines having two amino groups bonded to an aromatic ring and a hetero atom other than the nitrogen atom of the amino groups, such as diaminotetraphenylthiophene; and aliphatic diamines and alicyclic diamines such as 1,1-methaxylylenediamine, 1,3-propane diamine, tetramethylenediamine, pentamethylenediamine, octamethylenediamine, nonamethylenediamine, 4,4-diaminoheptamethylenediamine, 1,4-diaminocyclohexane, isophorone diamine, tetrahydrodicyclopentadienylenediamine, hexahydro-4,7-methanoindanylene dimethylenediamine, tricyclo[6,2,1,0$^{2.7}$]-undecylenic dimethyldiamine, and 4,4'-methylenebis(cyclohexylamine).

Among these, the diamine compound is preferably an aromatic diamine compound. Specifically, preferred are p-phenylenediamine, m-phenylenediamine, 4,4'-diaminodiphenylmethane, 4,4'-diaminodiphenyl ether, 3,4'-diaminodiphenyl ether, 4,4'-diaminodiphenyl sulfide, and 4,4'-diaminodiphenyl sulfone, and particularly preferred are 4,4'-diaminodiphenyl ether and p-phenylenediamine.

The diamine compound may be used alone or in combination of two or more thereof. When two or more diamine compounds are used in combination, aromatic diamine compounds or aliphatic diamine compounds may be used in combination, or an aromatic diamine compound and an aliphatic diamine compound may be used in combination.

The weight average molecular weight of the polyimide precursor for use in the present exemplary embodiment is preferably 5,000 or more and 300,000 or less, and more preferably 10,000 or more and 150,000 or less.

The weight average molecular weight of the polyimide precursor is measured by a gel permeation chromatography (GPC) method under the following measurement conditions.

- ·Column: Tosoh TSKgelα-M (7.8 mm I.D × 30 cm)
- ·Eluent: DMF (dimethylformamide)/30 mM LiBr/60 mM phosphoric acid
- ·Flow rate: 0.6 mL/min
- ·Injection amount: 60 μL
- ·Detector: RI (Differential refractometer)

In the present exemplary embodiment, the content of the polyimide precursor is preferably 0.1 mass% or more and 40 mass% or less, and more preferably 1 mass% or more and 25 mass% or less with respect to the total mass of the polyimide precursor solution.

(Particles)

The polyimide precursor solution used in the first step contains particles.

From the viewpoint of forming pores, it is preferable that the particles are dispersed without being dissolved in the polyimide precursor solution.

The material of the particles is not particularly limited as long as the particles do not dissolve in the polyimide precursor solution.

Here, in the present exemplary embodiment, "the particles do not dissolve" includes dissolution in a range of 3 mass% or less with respect to the target liquid, in addition to that the particles do not dissolve in the target liquid

(specifically, the solvent contained in the polyimide precursor solution), at 25°C.

The particles are broadly classified into resin particles and inorganic particles, and any of these particles may be used, and resin particles are preferable from the viewpoint of excellent removability of particles in the second step to be described later.

-Resin Particles-

The resin particles are not particularly limited as long as the resin particles do not dissolve in a polyimide precursor solution (specifically, a solvent contained in the polyimide precursor solution). In consideration of the removability of the particles in the second step to be described later, the resin particles are preferably formed of a resin other than polyimide.

Examples of the resin particles include resin particles obtained by polycondensation of a polymerizable monomer such as a polyester resin, a urethane resin, or the like, and resin particles obtained by addition polymerization (specifically, radical addition polymerization) of a polymerizable monomer such as a vinyl resin, an olefin resin, a fluororesin, or the like.

Among these, as the resin particles, a vinyl resin is preferable, and specific examples thereof include at least one selected from the group consisting of a (meth)acrylic resin, a (meth)acrylic acid ester resin, a styrene-(meth)acrylic resin, and a polystyrene resin.

Further, the resin particles may or may not be cross-linked.

The resin particles are preferably used as a resin particle dispersion liquid containing resin particles obtained by emulsion polymerization or the like, for example, from the viewpoint of simplifying the process of manufacturing the polyimide precursor solution.

When the resin particles are formed of a vinyl resin, examples of the monomer used for obtaining the vinyl resin include the following monomers.

Examples of the monomer used for obtaining a vinyl resin include: styrenes having a styrene skeleton, such as styrene, alkyl-substituted styrene (for example, α-methylstyrene, 2-methylstyrene, 3-methylstyrene, 4-methylstyrene, 2-ethylstyrene, 3-ethylstyrene, and 4-ethylstyrene), halogen-substituted styrene (for example, 2-chlorostyrene, 3-chlorostyrene, and 4-chlorostyrene), and vinyl naphthalene; esters having a vinyl group (also called (meta)acrylic acid esters) such as methyl (meth)acrylate, ethyl (meth)acrylate, n-propyl (meth)acrylate, n-butyl (meth)acrylate, lauryl (meth)acrylate, 2-ethylhexyl (meth)acrylate; vinyl nitriles such as acrylonitrile and methacrylonitrile; vinyl ethers such as vinyl methyl ether and vinyl isobutyl ether; vinyl ketones such as vinyl methyl ketone, vinyl ethyl ketone, and vinyl isopropenyl ketone; acids such as (meth)acrylic acid, maleic acid, cinnamic acid, fumaric acid, and vinyl sulfonic acid; and bases such as ethyleneimine, vinylpyridine, and vinylamine.

Other than the monomer described above, as other monomers, a monofunctional monomer such as vinyl acetate, a bifunctional monomer such as ethylene glycol dimethacrylate, nonane diacrylate, and decanediol diacrylate, and a polyfunctional monomer such as trimethylolpropane triacrylate and trimethylolpropane trimethacrylate may be used in combination.

The vinyl resin may be a resin obtained by using these monomers alone, or a resin which is a copolymer obtained by using two or more of these monomers.

When the resin particles are formed of a vinyl resin, the resin particles are preferably a vinyl resin obtained by using styrene as a monomer. As the vinyl resin obtained by using styrene, the proportion of styrene in all monomer components is preferably 20 mass% or more and 100 mass% or less, and more preferably 40 mass% or more and 100 mass% or less.

That is, as the vinyl resin, the structural unit derived from styrene is preferably contained in an amount of 20 mass% or more and 100 mass% or less, and more preferably 40 mass% or more and 100 mass% or less with respect to the mass of the vinyl resin.

The average particle diameter, shape, or the like of the resin particles are not particularly limited, and may be appropriately determined according to the size and/or shape of the target pores.

The volume average particle diameter of the resin particles is, for example, in the range of 0.03 μm or more and 3.0 μm or less. The volume average particle diameter of the resin particles is preferably 0.04 μm or more, more preferably 0.05 μm or more, and still more preferably 0.07 μm or more. The volume average particle diameter of the resin particles is preferably 2.50 μm or less, more preferably 2.45 μm or less, and still more preferably 2.40 μm or less.

The average particle diameter of the resin particles is measured by using a particle size distribution obtained by measurement by a laser diffraction type particle size distribution analyzer (for example, Coulter Counter LS13, manufactured by Beckman Coulter Co., Ltd.), and drawing the cumulative distribution from the small particle size side with respect to the volume with respect to the divided particle size range (so-called channel). In the cumulative distribution, the particle diameter corresponding to the cumulative percentage of 50% of all the particles is the volume average particle diameter D50v.

-Inorganic Particles-

Specific examples of the inorganic particles include inorganic particles such as silica (silicon dioxide) particles, magnesium oxide particles, alumina particles, zirconia particles, calcium carbonate particles, calcium oxide particles, titanium dioxide particles, zinc oxide particles, and cerium oxide particles. As described above, the particles preferably have a shape close to a spherical shape. From this viewpoint, the inorganic particles are preferably inorganic particles such as silica particles, magnesium oxide particles, calcium carbonate particles, titanium dioxide particles, and alumina particles, more preferably inorganic particles such as silica particles, titanium dioxide particles, and alumina particles, and still more preferably silica particles.
These inorganic particles may be used alone or in combination of two or more thereof.
When the wettability and dispersibility of the inorganic particles in the solvent of the polyimide precursor solution are insufficient, the surface of the inorganic particles may be modified if necessary.
Examples of a surface modification method for the inorganic particles include a method of treating with an alkoxysilane having an organic group represented by a silane coupling agent, and a method of coating with organic acids such as oxalic acid, citric acid and lactic acid.
The average particle diameter and shape of the inorganic particles are not particularly limited, and may be appropriately determined according to the size and shape of the target pores.
The content of the particles contained in the polyimide precursor solution used in the first step is preferably 0.1 mass% or more and 40 mass% or less, more preferably 0.5 mass% or more and 30 mass% or less, further preferably 1 mass% or more and 25 mass% or less, and still more preferably 1 mass% or more and 20 mass% or less, with respect to the total mass of the polyimide precursor solution.

(Solvent)

The polyimide precursor solution used in the first step contains a solvent.
The solvent is preferably a solvent that dissolves the polyimide precursor and does not dissolve or is difficult to dissolve the particles.
The solvent is not particularly limited as long as the solvent has the above-described properties, but is preferably a water-soluble organic solvent, water, or a mixed solvent thereof, and more preferably a mixed solvent of a water-soluble organic solvent and water (also referred to as an aqueous solvent).

-Water-Soluble Organic Solvent-

The term "water-soluble" in the water-soluble organic solvent means that the target substance is dissolved in water by 1 mass% or more at 25°C.
Examples of the water-soluble organic solvent include aprotic polar solvents, water-soluble ether-based solvents, water-soluble ketone-based solvents, and water-soluble alcohol-based solvents.
Specific examples of the aprotic polar solvent include at least one selected from the group consisting of N-methyl-2-pyrrolidone (NMP), N,N-dimethylformamide (DMF), N,N-1,3-dimethyl-2-imidazolidinone (DMI), N, N-dimethylacetamide (DMAc), N,N-diethylacetamide (DEAc), dimethyl sulfoxide (DMSO), hexamethylenephosphoramide (HMPA), N-methylcaprolactam, N-acetyl-2-pyrrolidone, and 1,3-dimethyl-imidazolidone. Among these, the aprotic polar solvent is preferably N-methyl-2-pyrrolidone (NMP), N,N-dimethylformamide (DMF), N,N-1,3-dimethyl-2-imidazolidinone (DMI), and N,N-dimethylacetamide (DMAc).
The water-soluble ether-based solvent is a water-soluble solvent having an ether bond in one molecule. Examples of the water-soluble ether-based solvent include tetrahydrofuran (THF), dioxane, trioxane, 1,2-dimethoxyethane, diethylene glycol dimethyl ether, and diethylene glycol diethyl ether. Among these, the water-soluble ether-based solvent is preferably tetrahydrofuran and dioxane.
The water-soluble ketone-based solvent is a water-soluble solvent having a ketone group in one molecule. Examples of the water-soluble ketone-based solvent include acetone, methyl ethyl ketone, and cyclohexanone. Among these, the water-soluble ketone-based solvent is preferably acetone.
The water-soluble alcohol-based solvent is a water-soluble solvent having an alcoholic hydroxy group in one molecule. Examples of the water-soluble alcohol solvent include methanol, ethanol, 1-propanol, 2-propanol, tert-butyl alcohol, ethylene glycol, ethylene glycol monoalkyl ether, propylene glycol, propylene glycol monoalkyl ether, diethylene glycol, diethylene glycol monoalkyl ether, 1,2-propanediol, 1,3-propanediol, 1,3-butanediol, 1,4-butanediol, 2,3-butanediol, 1,5-pentanediol, 2-butene-1,4-diol, 2-methyl-2,4-pentanediol, glycerin, 2-ethyl-2-hydroxymethyl-1,3-propanediol, and 1,2,6-hexanetriol. Among these, the water-soluble alcohol solvent is preferably methanol, ethanol, 2-propanol, ethylene glycol, ethylene glycol monoalkyl ether, propylene glycol, propylene glycol monoalkyl ether, diethylene glycol, and diethylene glycol monoalkyl ether.

The water-soluble organic solvent preferably contains an organic amine compound.

Hereinafter, the organic amine compound will be described.

·Organic Amine Compound

The organic amine compound is a compound that amine-chlorides a polyimide precursor (specifically, a carboxyl group of the polyimide precursor) to increase the solubility in the aqueous solvent and that also functions as an imidization accelerator. Specifically, the organic amine compound is preferably an amine compound having a molecular weight of 170 or less. The organic amine compound may be a compound excluding the diamine compound which is a raw material of the polyimide precursor.

The organic amine compound is preferably a water-soluble compound. The "water-soluble" means that the target substance dissolves in water in an amount of 1 mass% or more at 25°C.

Examples of the organic amine compound include a primary amine compound, a secondary amine compound, and a tertiary amine compound.

Among these, the organic amine compound is preferably at least one selected from a secondary amine compound and a tertiary amine compound and particularly preferably a tertiary amine compound. When a tertiary amine compound or a secondary amine compound (in particular, a tertiary amine compound) is applied as the organic amine compound, the solubility of the polyimide precursor in a solvent is easily increased, the film-forming property is easily improved, and the storage stability of the polyimide precursor solution is easily improved.

Examples of the organic amine compound also include a polyvalent amine compound having a valency of 2 or more in addition to a monovalent amine compound. When a polyvalent amine compound having a valency of 2 or more is applied, a pseudo-cross-linked structure is easily formed between molecules of the polyimide precursor, and the storage stability of the polyimide precursor solution is easily improved.

Examples of the primary amine compound include methylamine, ethylamine, n-propylpropylamine, isopropylamine, 2-ethanolamine, and 2-amino-2-methyl-1-propanol.

Examples of the secondary amine compound include dimethylamine, 2-(methylamino)ethanol, 2-(ethylamino)ethanol, and morpholine.

Examples of the tertiary amine compound include 2-dimethylaminoethanol, 2-diethylaminoethanol, 2-dimethylaminopropanol, pyridine, triethylamine, picoline, N-methylmorpholine, N-ethylmorpholine, 1,2-dimethylimidazole, 2-ethyl-4-methylimidazole, and N-alkylpiperidine (for example, N-methylpiperidine and N-ethylpiperidine).

The organic amine compound is preferably a tertiary amine compound from the viewpoint of obtaining a film having a high strength. In this regard, at least one selected from the group consisting of 2-dimethylaminoethanol, 2-diethylaminoethanol, 2-dimethylaminopropanol, pyridine, triethylamine, picoline, N-methylmorpholine, N-ethylmorpholine, 1,2-dimethylimidazole, 2-ethyl-4-methylimidazole, N-methylpiperidine, and N-ethylpiperidine is more preferable. In particular, N-alkylmorpholine is preferably used.

Here, from the viewpoint of obtaining a film having a high strength, the organic amine compound is preferably an amine compound having a aliphatic cyclic structure or an aromatic ring structure having a heterocyclic structure containing nitrogen (hereinafter, referred to as a "nitrogen-containing heterocyclic amine compound"). The nitrogen-containing heterocyclic amine compound is more preferably a tertiary amine compound. That is, the organic amine compound is more preferably a tertiary cyclic amine compound.

Examples of the tertiary cyclic amine compound include isoquinolines (amine compounds having an isoquinoline skeleton), pyridines (amine compounds having a pyridine skeleton), pyrimidines (amine compounds having a pyrimidine skeleton), pyrazines (amine compounds having a pyrazine skeleton), piperazines (amine compounds having a piperazine skeleton), triazines (amine compounds having a triazine skeleton), imidazoles (amine compounds having an imidazole skeleton), morpholines (amine compounds having a morpholine skeleton), polyaniline, and polypyridine.

From the viewpoint of obtaining a polyimide film in which variation in film thickness is suppressed, the tertiary cyclic amine compound is preferably at least one selected from the group consisting of morpholines, pyridines, piperidines, and imidazoles, and more preferably morpholines (amine compounds having a morpholine skeleton) (that is, morpholine compounds). Among these, at least one selected from the group consisting of N-methylmorpholine, N-methylpiperidine, pyridine, 1,2-dimethylimidazole, 2-ethyl-4-methylimidazole, and picoline is more preferred, and N-methylmorpholine is more preferred.

The organic amine compounds may be used alone or in combination of two or more thereof.

The content of the organic amine compound used in the present exemplary embodiment is preferably 30% or less, and more preferably 15% or less, with respect to the total mass of the polyimide precursor solution. The lower limit value of the content of the organic amine compound is not particularly limited, and may be, for example, 1% or more with respect to the total mass of the polyimide precursor solution.

The water-soluble organic solvents may be used alone or in combination of two or more thereof.

The boiling point of the water-soluble organic solvent is preferably 270°C or lower, more preferably 60°C or

higher and 250°C or lower, and still more preferably 80°C or higher and 230°C or lower, from the viewpoint of suppressing the residue in the polyimide porous film body and the viewpoint of obtaining the polyimide porous film body having high mechanical strength.

The content of the water-soluble organic solvent used in the present exemplary embodiment is preferably 30 mass% or less, and more preferably 20 mass% or less, with respect to the total mass of the aqueous solvent contained in the polyimide precursor solution.

The lower limit value of the content of the water-soluble organic solvent is not particularly limited, and examples thereof include 1 mass% with respect to the total mass of the polyimide precursor solution.

-Water-

Examples of water include distilled water, ion-exchanged water, ultrafiltered water, and pure water.

The content proportion of the water for use in the present exemplary embodiment is preferably 50 mass% or more and 90 mass% or less, more preferably 60 mass% or more and 90 mass% or less, and still more preferably 60 mass% or more and 80 mass% or less, with respect to the total mass of the aqueous solvent contained in the polyimide precursor solution.

The content of the aqueous solvent contained in the polyimide precursor solution used in the first step is generally 50 mass% or more and 99 mass% or less, and preferably 40 mass% or more and 99 mass% or less, with respect to the total mass of the polyimide precursor solution.

(Other Additives)

The polyimide precursor solution used in the first step may contain a catalyst for promoting an imidization reaction, a leveling material for improving the film quality, and the like.

As the catalyst for promoting the imidization reaction, a dehydrating agent such as an acid anhydride, an acid catalyst such as a phenol derivative, a sulfonic acid derivative, or a benzoic acid derivative may be used.

The polyimide precursor solution may contain a conductive agent (for example, having a volume resistivity of less than $10^7$ $\Omega\cdot$cm) or a semi-conductive agent (for example, having a volume resistivity of $10^7$ $\Omega\cdot$cm or more and $10^{13}$ $\Omega\cdot$cm or less) added for imparting conductivity, for example, depending on the intended use of the polyimide film.

Examples of the conductive agent include: carbon black (for example, acidic carbon black having a pH of 5.0 or less); metals (for example, aluminum, nickel, or the like); metal oxides (for example, yttrium oxide, tin oxide, or the like); and ionic conductive materials (for example, potassium titanate, LiCl, or the like).

The conductive agents may be used alone or in combination of two or more thereof.

Further, the polyimide precursor solution may contain inorganic particles added for improving mechanical strength, depending on the intended use of the polyimide film.

Examples of the inorganic particles include particulate materials such as silica powder, alumina powder, barium sulfate powder, titanium oxide powder, mica, and talc.

Further, $LiCoO_2$, $LiMn_2O$ and the like used as electrodes of a lithium ion battery may be contained.

[Method for Preparing Polyimide Precursor Solution]

The method for preparing the polyimide precursor solution used in the first step is not particularly limited.

From the viewpoint of simplification of the step, a method of preparing a polyimide precursor solution by synthesizing a polyimide precursor in a dispersion liquid in which particles are dispersed in an aqueous solvent is preferred. When the particles are resin particles, the resin particles may be granulated in an aqueous solvent to obtain the above dispersion liquid.

Specific examples of the method for preparing the polyimide precursor solution include the following methods.

First, resin particles are granulated in an aqueous solvent to obtain a resin particle dispersion liquid. Then, a tetracarboxylic dianhydride and a diamine compound are polymerized in the resin particle dispersion liquid in the presence of an organic amine compound to generate a resin (that is, polyimide precursor), thereby giving a polyimide precursor solution.

Another example of the method for preparing the polyimide precursor solution is a method in which a solution in which a polyimide precursor is dissolved in an aqueous solvent and resin particles in a dry state are mixed, a method in which a solution in which the polyimide precursor is dissolved in an aqueous solvent and a dispersion liquid in which the resin particles are previously dispersed in an aqueous solvent are mixed.

[Coating and Drying of Polyimide Precursor Solution]

In the first step, the polyimide precursor solution obtained by the above-described method is coated onto the substrate to form a coating film. The coating film contains a solution containing a polyimide precursor and particles. The particles in the coating film are distributed in a state where aggregation is suppressed.
Thereafter, the coating film formed on the substrate is dried to form a film containing the polyimide precursor and the particles.
The substrate on which the polyimide precursor solution is coated is not particularly limited.
Examples of the substrate include a resin substrate made of polystyrene, polyethylene terephthalate or the like; a glass substrate; a ceramic substrate; a metallic substrate made of iron, stainless steel (SUS) or the like; and a composite material substrate made of a material combining the above materials.
If necessary, the substrate may be provided with a release layer by performing a release treatment with, for example, a silicone, fluorine release agent, or the like. It is also effective to roughen the surface of the substrate to a size of about the particle diameter of the particles to promote the exposure of the particles on the contact surface of the substrate.
The method of coating the polyimide precursor solution onto the substrate is not particularly limited, and examples thereof include various methods such as a spray coating method, a rotary coating method, a roll coating method, a bar coating method, a slit die coating method, and an inkjet coating method.
The method of drying the coating film formed on the substrate is not particularly limited, and examples thereof include various methods such as heat drying, natural drying, and vacuum drying.
More specifically, it is preferable to form the film by drying the coating film such that the solvent remaining in the film is 50% or less (preferably 30% or less) with respect to the solid content of the film.
Since the dispersion state of the particles is changed by the drying rate, the irregularity of the dispersion state of the pores in the polyimide porous film body to be manufactured is controlled by the drying rate.
Specifically, when the drying rate is slow, the particles easily move in the coating film, so that the dispersibility of the particles in the coating film is enhanced, and the irregularity of the dispersion state of the pores in the polyimide porous film main body tends to be low. On the other hand, when the drying rate is increased, the particles are likely to be fixed in a state where the particles are unevenly distributed in the coating film, and thus the irregularity of the dispersion state of the pores in the polyimide porous film body tends to be high.
The drying rate may be controlled by adjusting the drying temperature, adjusting the drying time, or the like.
In the first step, after the coating film is obtained, a treatment of exposing the resin particles may be performed in the process of drying to form the film. By performing the treatment of exposing the particles, the porosity of the polyimide porous film body is increased.
Specific examples of the treatment of exposing the particles include the methods shown below.
In the process of obtaining the coating film containing the polyimide precursor and the particles and then drying the coating film to form a film containing the polyimide precursor and the particles, the polyimide precursor in the formed film is in a state of being soluble in water as described above. Therefore, the particles may be exposed from the film by, for example, wiping the film with water or immersing the film in water. Specifically, for example, the polyimide precursor covering the particles (and the solvent) is (are) removed by performing a treatment of exposing the particles by wiping the surface of the film with water. As a result, the particles are exposed on the surface of the treated film.
In particular, when a film in which the particles are embedded is formed, it is preferable to adopt the above treatment as a treatment of exposing the particles embedded in the film.

[Second Step and Third Step]

In the second step, the particles are removed from the film obtained in the first step. By removing the particles from the film, a porous film is formed.
In the third step, the film is heated to imidize the polyimide precursor in the film.
Through the second step and the third step, the polyimide porous film body is manufactured.

[Removal of Particles]

The method of removing the particles from the film in the second step may be appropriately determined depending on the particles in the film.
Examples of the method of removing the particles from the film include a method of decomposing and removing the particles (preferably resin particles) by heating, a method of dissolving and removing the particles with an organic solvent, and a method of removing the resin particles by decomposition with a laser.
These methods may be used alone or in combination of two or more thereof. The shape of the pores (specifically,

the flatness) may be controlled by using two or more of methods for removing the particles from the film and adjusting the removal rate of the particles.

In the case of using the method of decomposing and removing the particles by heating, there is a method that also serves as a third step to be described later, but from the viewpoint of ease of controlling the shape of the pores (specifically, the flatness), it is preferable to perform the third step (imidization) after the particles are removed from the film by the second step.

In the second step, in the case of the method of decomposing and removing the resin particles by heating, the heating conditions include the following conditions.

The heating temperature is, for example, preferably 150°C or more and 350°C or less, more preferably 170°C or more and 350°C or less, and still more preferably 200°C or more and 350°C or less.

The heating time is, for example, preferably 1 minute or more and 60 minutes or less, more preferably 1 minute or more and 45 minutes or less, and still more preferably 1 minute or more and 30 minutes or less.

Specific examples of the method of dissolving and removing the resin particles with an organic solvent include a method of bringing the film into contact with the organic solvent to dissolve and remove the resin particles with the organic solvent.

Examples of the method of bringing the film into contact with the organic solvent include a method of immersing the film in an organic solvent, a method of coating an organic solvent to the film, and a method of bringing the film into contact with the organic solvent vapor.

The organic solvent used for dissolving the resin particles is not particularly limited as long as it is an organic solvent that does not dissolve the polyimide precursor and the polyimide and may dissolve the resin particles.

When the particles are resin particles, examples of the organic solvent include: ethers such as tetrahydrofuran and 1,4-dioxane; aromatic substances such as benzene and toluene; ketones such as acetone; and esters such as ethyl acetate.

Among these, preferred are ethers such as tetrahydrofuran and 1,4-dioxane, or aromatic substances such as benzene and toluene, and more preferred are tetrahydrofuran and toluene.

In the case of using the method of dissolving and removing the particles with an organic solvent, the method is preferably performed when the imidization ratio of the polyimide precursor in the film is 10% or more, from the viewpoints of improving the removability of the particles and preventing the film from being dissolved in the organic solvent.

Examples of the method of setting the imidization ratio to 10% or more include a method of heating under the heating conditions of the first stage to be described later.

That is, it is preferable that the particles in the film are dissolved and removed with an organic solvent after the heating in the first stage to be described later.

[Imidization]

In the third step, for heating to imidize the polyimide precursor in the film, for example, heating in two or more stages is preferably used.

For example, when the particles are resin particles and are heated in two stages, specifically, the following heating conditions are adopted.

The shape of the pores (specifically, the flatness) is controlled by the heating conditions for imidizing the polyimide precursor. By appropriately controlling the heating conditions (that is, the heating temperature and the heating time), the shrinkage ratio of the film (in particular, the thickness direction) changes, and thus the shape of the pores (specifically, the flatness) is controlled.

The heating condition in the first stage is preferably a temperature at which the shape of the resin particles is maintained. Specifically, for example, the heating temperature is preferably in the range of 50°C or higher and less than 250°C, and more preferably in the range of 100°C or higher and 230°C or lower. The heating time is preferably in the range of 10 minutes to 120 minutes. The higher the heating temperature, the shorter the heating time may be.

In the heating conditions of the first stage, the heating temperature is also referred to as a pre-imidization temperature, and the heating time is also referred to as a pre-imidization time.

Examples of the heating conditions in the second stage include heating at 250°C or higher and 500°C or lower (preferably 300°C or higher and 450°C or lower) for 20 minutes or longer and 120 minutes or shorter. When the heating conditions are set within these ranges, the imidization reaction further progresses. During the heating reaction, the temperature is preferably gradually increased stepwise or at a constant rate before the final temperature of heating is reached.

In the heating conditions of the second stage, the heating temperature is also referred to as a firing temperature, and the heating time is also referred to as a firing time.

The heating conditions are not limited to the above two-stage heating method, and for example, a one-stage heating method may be adopted. In the case of the one-stage heating method, for example, the imidization may be

completed only under the heating conditions shown in the second stage above.

Here, the imidization ratio of the polyimide precursor will be described.

Examples of a partially imidized polyimide precursor include a precursor having a structure having a repeating unit represented by the following general formula (I-1), the following general formula (I-2), and the following general formula (I-3).

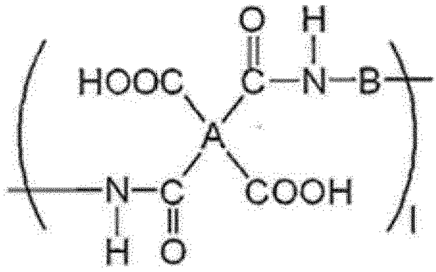

(I-1)

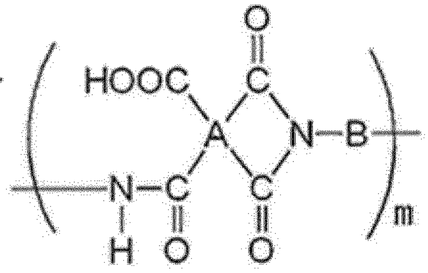

(I-2)

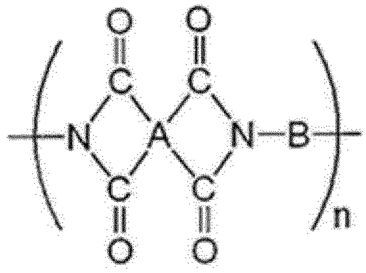

(I-3)

In the general formula (I-1), the general formula (I-2), and the general formula (I-3), A represents a tetravalent organic group and B represents a divalent organic group. l represents an integer of 1 or more, and m and n independently represent an integer of 0 or 1 or more.

A and B have the same meaning as A and B in the above general formula (I).

The imidization ratio of the polyimide precursor represents the ratio of the number of imide-ring-closed bond parts (2n + m) to the total number of bonds (2l + 2m + 2n) in the bonding part of the polyimide precursor which is a reaction part of the tetracarboxylic dianhydride and the diamine compound. That is, the imidization ratio of the polyimide precursor is indicated by "(2n + m)/(2l + 2m + 2n)".

The imidization ratio of the polyimide precursor (that is, value of "(2n + m)/(2l + 2m + 2n)") is measured by the following method.

-Measurement of Imidization Ratio of Polyimide Precursor-

·Preparation of polyimide precursor sample

(i) A polyimide precursor solution to be measured is coated onto a silicon wafer in a film thickness range of 1 μm or more and 10 μm or less to prepare a coating film sample.
(ii) The coating film sample is immersed in tetrahydrofuran (THF) for 20 minutes to replace the solvent in the coating film sample with tetrahydrofuran (THF). The solvent for immersion is not limited to THF, and is selected from a solvent that does not dissolve the polyimide precursor and is miscible with the solvent component contained in the polyimide precursor solution. Specifically, alcohol solvents such as methanol and ethanol, and ether compounds such as dioxane is used.
(iii) The coating film sample is taken out from the THF, and $N_2$ gas is sprayed onto the THF adhering to the surface of the coating film sample to remove the THF. A treatment is performed for 12 hours or longer in a range of 5°C or higher and 25°C or lower under a reduced pressure of 10 mmHg or less to dry the coating film sample, so as to prepare a polyimide precursor sample.

·Preparation of 100% imidized standard sample

(iv) In the same manner as in the (i) above, a polyimide precursor solution to be measured is coated onto a silicon wafer to prepare a coating film sample.
(v) The coating film sample is heated at 380°C for 60 minutes to carry out an imidization reaction to prepare a 100% imidized standard sample.

·Measurement and analysis

(vi) Infrared absorption spectra of the 100% imidized standard sample and the polyimide precursor sample are measured using a Fourier transform infrared spectrophotometer (FT-730, manufactured by HORIBA, Ltd.). The ratio I’ (100) of the absorption peak (Ab’(1780 $cm^{-1}$)) derived from the imide bond near 1780 $cm^{-1}$ to the absorption peak (Ab’(1500 $cm^{-1}$)) derived from the aromatic ring near 1500 $cm^{-1}$ in the 100% imidized standard sample is determined.
(vii) Similarly, the polyimide precursor sample is measured, and the ratio I (x) of the absorption peak (1780 $cm^{-1}$) derived from the imide bond near 1780 $cm^{-1}$ to the absorption peak (1500 $cm^{-1}$) derived from the aromatic ring near 1500 $cm^{-1}$ is determined.

Then, using the measured absorption peaks I’ (100) and I (x), the imidization ratio of the polyimide precursor is calculated based on the following equation.

$$\cdot\text{Equation: Imidization ratio of polyimide precursor} = I\ (x)/I'\ (100)$$

$$\cdot\text{Equation: } I'\ (100) = (Ab'(1780\ cm^{-1}))/(Ab'(1500\ cm^{-1}))$$

$$\cdot\text{Equation: } I\ (x) = (Ab(1780\ cm^{-1}))/(Ab(1500\ cm^{-1}))$$

The measurement of the imidization ratio of the polyimide precursor is applied to the measurement of the imidization ratio of an aromatic polyimide precursor. When measuring the imidization ratio of an aliphatic polyimide precursor, a peak derived from a structure that does not change before and after the imidization reaction is used as an internal standard peak instead of the absorption peak of the aromatic ring.
The substrate used in the first step may be peeled off from the film after the first step, may be peeled off from the film after the second step, or may be peeled off from the obtained polyimide porous film after the third step.
The polyimide porous film body may have a single-layer structure or a multilayer structure.

[Application of Resin Particles to Surface of Polyimide Porous Film Body and Formation of Resin Porous Film on Surface of Polyimide Porous Film Body]

In order to apply the resin particles to the surface of the polyimide porous film body, the following method may be used.
Examples of the method of applying the resin particles include a spray method, a bar coating method, a die coating method, a knife coating method, a roll coating method, a reverse roll coating method, a gravure coating method, a screen printing method, an inkjet method, a laminating method, and an electrophotographic method. The resin particles may be dispersed in a dispersion medium to prepare a liquid composition, the liquid composition may be applied to the surface of the polyimide porous film body, and the dispersion medium may be removed.
The adhesion amount of the resin particles with respect to the surface of the polyimide porous film body may be controlled by the adhesion amount of the resin particles by the above-mentioned applying units, or the amount of the resin particles adhered to the surface of the polyimide porous film body may be adjusted by using an applicator or the like.
In order to form the resin porous film on the surface of the polyimide porous film body, the following method may be used.
For example, examples thereof include a method of forming a resin porous film by applying the resin particles to the surface of the polyimide porous film body by using the above-described application method and heating the applied resin particles to partially fuse the resin particles to each other. Here, in order to fuse the resin particles to each other, pressurization may be performed in addition to heating. As the heating conditions, for example, it is more preferable that the temperature is equal to or higher than the glass transition point of the resin contained in the resin particles. The pressurizing condition is preferably, for example, 3 MPa or more and 300 MPa or less.
The polyimide porous film according to the present invention includes resin particles (fluorine-containing resin particles in the case of the first exemplary embodiment) on two surfaces of the polyimide porous film body, but also includes the resin particles only on one surface of the polyimide porous film body.

<Non-Aqueous Secondary Battery Separator>

The non-aqueous secondary battery separator (hereinafter, also simply referred to as a "separator") according to the present disclosure is formed of the polyimide porous film according to the present disclosure described above.

When the separator according to the present disclosure is formed of the polyimide porous film according to the present disclosure, adhesion to the electrode is enhanced, and generation of a deposit due to deposition of ions is suppressed. In particular, when the separator according to the present disclosure is applied to a lithium ion secondary battery, generation of a deposit due to deposition of ions is suppressed at the interface between the separator and the electrode, and lithium dendrite can also be suppressed.

<Secondary Battery and Method for Manufacturing Secondary Battery>

A secondary battery according to the present disclosure and a method for manufacturing the secondary battery according to the present disclosure will be described.

The secondary battery according to the present disclosure includes the above-described electrode and the separator according to the present disclosure described above, and includes an adhesive layer formed between the electrode and the polyimide porous film body by resin particles. The use of a resin porous film is also described but not claimed.

Since the secondary battery according to the present disclosure has the above-described configuration, adhesion to the electrode is enhanced, and generation of a deposit due to deposition of ions is suppressed. In particular, when the secondary battery according to the present disclosure is a lithium ion secondary battery, generation of a deposit due to deposition of lithium ions is suppressed, and lithium dendrite can also be suppressed.

Furthermore, since the secondary battery according to the present disclosure has the above-described configuration, adhesion between the polyimide porous film body and the electrode is high, and it is possible to suppress formation of a gap between the polyimide porous film body and the electrode due to charging and discharging. In the secondary battery, when a gap is formed between the separator and the electrode, the ions are less likely to move, and the cycle properties are deteriorated. However, it is presumed that the secondary battery according to the present disclosure has excellent cycle properties since it is difficult to form a gap between the polyimide porous film body and the electrode as described above.

The method for manufacturing a secondary battery according to the present disclosure includes a step of adhering the separator according to the present disclosure and the electrode described above usingresin particles (hereinafter also referred to as an adhering step). The use of a resin porous film is also described but not claimed.

In the adhering step, it is preferable to apply at least one of heating and pressurization to a laminate of the separator and the electrode according to the present disclosure.

Hereinafter, as an example of the lithium ion secondary battery, a secondary battery according to the present disclosure and a method for manufacturing a secondary battery according to the present disclosure will be described with reference to FIGURE.

FIGURE is a schematic partial cross-sectional diagram showing an example of the secondary battery (lithium ion secondary battery) according to the present disclosure.

As shown in FIGURE, a lithium ion secondary battery 100 includes a positive electrode active material layer 110, an adhesive layer 410, a separator layer 510, an adhesive layer 420, and a negative electrode active material layer 310 housed inside an exterior member (not shown). The positive electrode active material layer 110 is provided on a positive electrode current collector 130, and the negative electrode active material layer 310 is provided on a negative electrode current collector 330. The separator layer 510 is provided to separate the positive electrode active material layer 110 and the negative electrode active material layer 310, and is arranged between the positive electrode active material layer 110 and the negative electrode active material layer 310 such that the positive electrode active material layer 110 and the negative electrode active material layer 310 face each other. The separator layer 510 includes a separator 511 and an electrolytic solution 513 filled inside the pores of the separator 511. Here, the polyimide porous film body in the separator according to the present disclosure (or the polyimide porous film according to the present disclosure) is applied to the separator 511, and the adhesive layers 410 and 420 show the adhesive layer formed by at least one of the resin particles and the resin porous film in the separator according to the present disclosure (or the polyimide porous film according to the present disclosure). More specifically, the adhesive layer 410 is formed at the interface between the non-opening portion of the separator 511 and the positive electrode active material layer 110, and the adhesive layer 420 is formed at the interface between the non-opening portion of the separator 511 and the negative electrode active material layer 310, respectively.

The positive electrode current collector 130 and the negative electrode current collector 330 are members provided if necessary.

(Positive Electrode Current Collector 130 and Negative Electrode Current Collector 330)

The material for use in the positive electrode current collector 130 and the negative electrode current collector 330 is not particularly limited, and any known conductive material may be used. For example, metals such as aluminum, copper, nickel and titanium may be used.

(Positive Electrode Active Material Layer 110)

The positive electrode active material layer 110 is a layer containing a positive electrode active material. If necessary, known additives such as a conductive auxiliary and a binder resin may be contained. The positive electrode active material is not particularly limited, and a known positive electrode active material is used. Examples thereof include lithium-containing composite oxides ($LiCoO_2$, $LiNiO_2$, $LiMnO_2$, $LiMn_2O_4$, $LiFeMnO_4$, $LiV_2O_5$, etc.), lithium-containing phosphates ($LiFePO_4$, $LiCoPO_4$, $LiMnPO_4$, $LiNiPO_4$, etc.) and conductive polymers (polyacetylene, polyaniline, polypyrrole, polythiophene, etc.). The positive electrode active materials may be used alone or in combination of two or more thereof.

(Negative Electrode Active Material Layer 310)

The negative electrode active material layer 310 is a layer containing a negative electrode active material. If necessary, known additives such as a binder resin may be contained. The negative electrode active material is not particularly limited, and a known positive electrode active material is used. Examples thereof include carbon materials (graphite (natural graphite, artificial graphite), carbon nanotubes, graphitized carbon, low temperature calcined carbon, etc.), metals (aluminum, silicon, zirconium, titanium, etc.), and metal oxides (tin dioxide, lithium titanate, etc.). The negative electrode active materials may be used alone or in combination of two or more thereof.

(Electrolytic Solution 513)

Examples of the electrolytic solution 513 include a non-aqueous electrolyte solution containing an electrolyte and a non-aqueous solvent.

Examples of the electrolyte include lithium salt electrolytes ($LiPF_6$, $LiBF_4$, $LiSbF_6$, $LiAsF_6$, $LiClO_4$, $LiN(FSO_2)_2$, $LiN(CF_3SO_2)_2$, $LiN(C_2F_5SO_2)$, and $LiC(CF_3SO_2)_3$). The electrolytes may be used alone or in combination of two or more thereof.

Examples of the non-aqueous solvent include cyclic carbonates (ethylene carbonate, propylene carbonate, butylene carbonate, etc.), and chain carbonates (diethyl carbonate, dimethyl carbonate, ethyl methyl carbonate, methyl acetate, ethyl acetate, methyl propionate, ethyl propionate, $\gamma$-butyrolactone, 1,2-dimethoxyethane, 1,2-diethoxyethane, etc.). The non-aqueous solvents may be used alone or in combination of two or more thereof.

(Method for Manufacturing Secondary Battery 100)

An example of a method for manufacturing the secondary battery 100 will be described.

A coating liquid for forming the positive electrode active material layer 110 containing the positive electrode active material is coated onto and dried on the positive electrode current collector 130 to obtain a positive electrode having the positive electrode active material layer 110 provided on the positive electrode current collector 130.

Similarly, the coating liquid for forming the negative electrode active material layer 310 containing the negative electrode active material is coated onto and dried on the negative electrode current collector 330 to obtain a negative electrode having the negative electrode active material layer 310 provided on the negative electrode current collector 330. The positive electrode and the negative electrode may be subjected to compression processing, if necessary.

Next, the separator 511 is arranged between the positive electrode active material layer 110 of the positive electrode and the negative electrode active material layer 310 of the negative electrode such that the positive electrode active material layer 110 of the positive electrode and the negative electrode active material layer 310 of the negative electrode face each other, thereby forming a laminated structure. In the laminated structure, the positive electrode current collector 130, the positive electrode active material layer 110, the separator layer 510, the negative electrode active material layer 310, and the negative electrode current collector 330 are laminated in this order. Then, at least one of pressure and heat is applied to the laminated structure, and the positive electrode and the separator 511, and the separator 511 and the negative electrode are adhered (adhering step). The laminated structure may be subjected to compression processing, if necessary.

Next, the laminated structure is housed in an exterior member, and then the electrolytic solution 513 is injected into the laminated structure. The injected electrolytic solution 513 penetrates into the pores of the separator 511.

Thus, the lithium ion secondary battery 100 is obtained.

In the adhering step, the heat and pressure used for adhering the positive electrode and the separator 511, and the separator 511 and the negative electrode may be determined according to the type of resin particles contained in the separator 511 and/or the type of resin contained in the resin porous film. In the adhering step, the conditions for applying heat and pressure used for adhering may be determined according to the type of resin particles and/or the type of resin contained in the resin porous film contained in the separator 511.

Hereinafter, the adhering step in the case where the resin particles are fluorine-containing resin particles will be described.

By applying at least one of heat and pressure to the laminated structure including the separator 511 having the fluorine-containing resin particles attached to the surface thereof in the thickness direction thereof, adhesion between the positive electrode and the separator 511 and adhesion between the separator 511 and the negative electrode are performed.

When pressure is applied in the thickness direction of the laminated structure, the fluorine-containing resin particles are fluidized by pressure to exhibit adhesiveness, whereby the positive electrode and the separator 511, and the separator 511 and the negative electrode are adhered to each other.

As a unit for applying pressure to the laminated structure, a known pressurizing device is used. Examples of the pair of pressure members included in the pressurizing device include a combination of a pressure roller and a pressure roller, a combination of a pressure roller and a pressure belt, and a combination of a pressure belt and a pressure belt.

The pressure applied to the laminated structure depends on the type of the fluorine-containing resin particles, and is preferably, for example, 3 MPa or more and 300 MPa or less, more preferably 10 MPa or more and 200 MPa or less, and still more preferably 30 MPa or more and 150 MPa or less.

When pressure is applied to the laminated structure, heat may be applied to the laminated structure.

Although the lithium ion secondary battery according to the present disclosure has been described above with reference to FIGURE, the lithium ion secondary battery according to the present disclosure is not limited thereto. The form of the separator according to the present disclosure is not particularly limited as long as the separator according to the present disclosure is applied.

[Examples]

Hereinafter, exemplary embodiments of the present invention will be described in detail with reference to examples, but the exemplary embodiments of the present invention are not limited to these examples at all. In the following description, all "parts" and "%" are based on mass unless otherwise specified.

Preparation of Fluorine-Containing Resin Particles

Fluorine-containing resin particles are prepared as follows.

[PVDF Particle Dispersion Liquid 1]

7.8 g of PVDF manufactured by Sigma-Aldrich Corporation is dissolved in 534 g of NMP (manufactured by Mitsubishi Chemical Co., Ltd.) at 85°C, and 66g of water is added to the solution to prepare a PVDF solution. The solution at 85°C is continuously added to a water tank containing 600g of water at 85°C. 7.8 g of a 10 mass% aqueous magnesium acetate solution is added to the mixed solution, PVDF particles are aggregated, and filtered through a membrane filter to obtain a PVDF particle dispersion liquid 1 having an average particle diameter of 100 nm (denoted as "PVDF1" in Table 1).

[PTFE Particle Dispersion Liquid 1]

The PTFE particle dispersion liquid 1 (denoted as "PTFE1" in Table 1) is prepared using a LUBRON LDW-410 (average particle size of 0.20 μm, manufactured by Dikin Co., Ltd.).

[PTFE Particle Dispersion Liquid 2]

15 g of LUBRON L-5F (average particle size of 5 μm, manufactured by Dikin Co., Ltd.) is added to a tank containing 185 g of toluene, sufficiently stirred, and ultrasonic dispersion is performed for 30 minutes to obtain a PTFE particle dispersion liquid 2 (denoted as "PTFE2" in Table 1).

[PTFE Particle Dispersion Liquid 3]

PTFE particle dispersion liquid 3 (indicated as "PTFE3" in Table 1) is obtained in the same manner as in PTFE particle dispersion liquid 2 except that Microdispers-8000 (average particle diameter of 8 μm, manufactured by Techno Chemical Co., Ltd.) is used.

Preparation of Polyimide Porous Film Body

A polyimide porous film body is prepared as follows.

<Preparation of Particles>

-Resin Particle Dispersion Liquid (1)-

110 parts by mass of styrene, 5 parts by mass of a surfactant DOWFAX 2A1 (a 47% solution, manufactured by Dow Chemical Company), and 220 parts by mass of deionized water are mixed, and the mixture is stirred and emulsified at 1,500 rpm for 30 minutes with a dissolver to prepare a monomeric emulsion liquid. Subsequently, 20 parts by mass of DOWFAX 2A1 (a 47% solution, manufactured by Dow Chemical Company) and 446.8 parts by mass of deionized water are introduced into the reaction vessel. After heating to 75°C under a nitrogen stream, 90 parts by mass of the monomeric emulsion liquid is added. Thereafter, a polymerization initiator solution in which 5.4 parts by mass of ammonium persulfate is dissolved in 25 parts by mass of deionized water is added dropwise over 10 minutes. After the dropwise addition, the mixture is allowed to react for 50 minutes, and the remaining monomeric emulsion liquid is added dropwise over 30 minutes, and the mixture is further reacted for 180 minutes, followed by cooling to obtain a resin particle dispersion liquid (1). The solid content concentration of the resin particle dispersion liquid (1) is 36.0 mass%. The average particle diameter of the resin particles is 0.05 μm.

-Resin Particle Dispersion Liquid (2)-

A resin particle dispersion liquid (2) containing resin particles having an average particle diameter of 0.40 μm is obtained by the same method as the resin particle dispersion liquid (1) except that the amount of DOWFAX 2A1 to be introduced into the reactor is 1.0 part by mass.

-Resin Particle Dispersion Liquid (3)-

A resin particle dispersion liquid (3) containing resin particles having an average particle diameter of 0.11 μm is obtained using the same method as the resin particle dispersion liquid (1) except that the amount of DOWFAX 2A1 to be introduced into the reactor is 14 parts by mass.

-Resin Particle Dispersion Liquid (4)-

A resin particle dispersion liquid (4) containing resin particles having an average particle diameter of 0.10 μm is obtained using the same method as the resin particle dispersion liquid (1) except that the amount of DOWFAX 2A1 to be introduced into the reactor is 18 parts by mass.

-Resin Particle Dispersion Liquid (5)-

5 parts by mass of the surfactant DOWFAX 2A1 and 195 parts by mass of deionized water are mixed in a water tank, and 115 parts by mass of EPOSTAR S12 (particle size of 1.2 μm, manufactured by Nippon Shokubai Co., Ltd.) is added thereto while stirring the mixed liquid, and further dispersed by an ultrasonic vibrator to obtain a resin particle dispersion liquid (5).

-Resin Particle Dispersion Liquid (6)-

5 parts by mass of the surfactant DOWFAX 2A1 and 195 parts by mass of deionized water are mixed in a water tank, and 115 parts by mass of EPOSTAR MA1002 (particle diameter of 2.0 μm, manufactured by Nippon Shokubai Co., Ltd.) is added thereto while stirring the mixed liquid, and further dispersed by an ultrasonic vibrator to obtain a resin particle dispersion liquid (6).

<Preparation of Polyimide Precursor-Containing Liquid>

-Preparation of Polyimide Precursor-Containing Liquid (A)-

560.0 Parts by mass of ion exchange water is heated to 50°C under a nitrogen stream, and 53.75 parts by mass of p-phenylenediamine and 146.25 parts by mass of 3,3',4,4'-biphenyltetracarboxylic dianhydride are added while stirring. A mixture of 150.84 parts by mass of N-methylmorpholine (hereinafter also referred to as "MMO") and 89.16 parts by mass of ion exchanged water is added thereto under a nitrogen stream at 50°C over 20 minutes while stirring. By reacting at 50°C for 15 hours, a polyimide precursor-containing liquid (A) containing a polyimide precursor (A) at a solid content concentration of 20 mass% is obtained.

<Polyimide Porous Film Body (1)>

169.85 parts of the polyimide precursor-containing liquid (A), 238.97 parts of the resin particle dispersion liquid (1), and 191.18 parts of an aqueous solvent (a mixed solution of NMP and water, mass ratio of NMP to water = 17.83: 173.35) are mixed.

The mixture is subjected to ultrasonic dispersion at 50°C for 30 minutes to obtain a polyimide precursor solution in which resin particles are dispersed. Using the obtained polyimide precursor solution, a polyimide porous film is obtained as follows.

A stainless steel substrate having a thickness of 1.0 mm for forming a coating film of a polyimide precursor solution is prepared. A polyimide precursor solution is applied onto the stainless steel substrate using an applicator such that the film thickness after application and drying became 400 μm in an area of 10 cm × 10 cm, thereby obtaining a coating film. The obtained coating film is heated and dried at 50°C for 120 minutes (first step).

Thereafter, the temperature is raised at a rate of 10°C/min, maintained at 200°C for 60 minutes, and then cooled to room temperature, and immersed in tetrahydrofuran for 30 minutes in order to remove the resin particles (second step).

Subsequently, the temperature is increased from room temperature (25°C; the same shall apply hereinafter) at a rate of 10°C/min, and the temperature is maintained at 350°C for 60 minutes (third step).

Thereafter, the mixture is cooled to room temperature to obtain a polyimide porous film body (1) having a film thickness of 20 μm.

<Polyimide Porous Film Bodies (2) to (6)>

Polyimide porous films bodies (2) to (6) are obtained in the same manner as the polyimide porous film body (1) except that the resin particle dispersion liquid (1) is changed to the resin particle dispersion liquids (2) to (6), respectively.

<Polyimide Porous Film Body (7)>

A polyimide precursor solution in which resin particles are dispersed is obtained in the same manner as in the case of the polyimide porous film body (1) except that 389.65 parts of the polyimide precursor-containing liquid (A), 128.5 parts of the resin particle dispersion liquid (1), and 137.94 parts of an aqueous solvent (a mixed solution of NMP and water, mass ratio of NMP to water = 30.41: 107.53) are mixed. Further, a polyimide porous film body (7) is obtained in the same manner as in the case of the polyimide porous film body (1), except that the obtained polyimide precursor solution in which resin particles are dispersed is used, the polyimide precursor solution is heated and dried at 80°C in the first step, held at 200°C for 60 minutes in the second step, and then held at 350°C for 60 minutes to heat and remove the particles, and when the temperature reached 400°C in the third step, the polyimide precursor solution is held for 60 minutes.

<Polyimide Porous Film Body (8)>

A polyimide precursor solution in which resin particles are dispersed is obtained in the same manner as in the case of the polyimide porous film body (1) except that 289.65 parts of the polyimide precursor-containing liquid (A), 172.41 parts of the resin particle dispersion liquid (1), and 137.94 parts of an aqueous solvent (a mixed solution of NMP and water, mass ratio of NMP to water = 30.41: 107.53) are mixed. Further, a polyimide porous film body (8) is obtained in the same manner as in the case of the polyimide porous film body (1), except that the obtained polyimide precursor solution in which resin particles are dispersed is used, the polyimide precursor solution is heated and dried at 80°C in the first step, held at 200°C for 60 minutes in the second step, and then held at 350°C for 60 minutes to heat and remove the particles, and when the temperature reached 400°C in the third step, the polyimide precursor solution is held for 60

minutes.

[Measurement and Calculation]

The porosity and the average pore diameter of the obtained polyimide porous film body are determined by the method described above.
With respect to the air permeability, a sample for measurement of air permeability is prepared from the obtained polyimide porous film body according to the air permeability test method of the Gurley method (JIS P8117: 2009), and the obtained measurement sample is used to measure the air permeability by the method described above.
The results are shown in Table 1.

[Examples 1 to 12] Examples 2, 11, and 12 are not claimed.

Fluorine-containing resin particles shown in Table 1 below are applied to both surfaces of the polyimide porous film body described in Table 1 below at the adhesion amount shown in Table 1 below, thereby obtaining a separator.

[Comparative Example 1]

A separator is obtained in the same manner as in Example 1 except that the following polyolefin porous film body (9) is used instead of the polyimide porous film body.

<Polyolefin Porous Film Body (9)>

A polyolefin microporous film prepared in the same manner as in Comparative Example 2 of WO 2017/170288 is used as the polyolefin porous film body (9).
Specifically, a polyethylene resin composition is obtained by adding 0.08 parts by weight of a phenolic antioxidant per 100 parts by weight of a polyethylene resin and 0.08 parts by weight of the phosphorus antioxidant per 100 parts by weight of the polyethylene resin to a polyethylene resin (melting point: 135°C, crystal dispersion temperature: 90°C) composed of 70 parts by weight of a high density polyethylene having a weight average molecular weight (Mw) of $5.6 \times 10^5$ and a molecular weight distribution (MWD) of 4.05 and 30 parts by weight of an ultra-high molecular weight polyethylene having an Mw of $1.9 \times 10^6$ and a MWD of 5.09. 28.5 parts by weight of the obtained polyethylene resin composition is put into a twin screw extruder (strong kneading type segment), 71.5 parts by weight of liquid paraffin is supplied from a side feeder of this twin screw extruder, and melted and kneaded at 190°C and 300 rpm to prepare a polyethylene resin composition solution in the extruder.
The polyethylene resin composition solution thus prepared is extruded from a T-die installed at a tip of the extruder at 240°C, and a gel sheet (width of 800 mm) is formed with a thickness of 800 μm while being taken up by a cooling roll. Subsequently, the obtained gel sheet is introduced into a stretching machine as shown in Figure. 1 of WO 2017/170288, and the temperature of the obtained gel sheet is raised under the setting temperature of 125°C of the first furnace. Thereafter, simultaneous biaxial stretching is performed at 5 × 5 times at a transport speed of 45 m/min and a (setting) temperature of 115°C to obtain a stretched gel sheet. The stretched gel sheet is immersed in a methylene chloride bath adjusted to 25°C, and liquid paraffin is removed until the amount of liquid paraffin present in the gel sheet became 1% or less by volume. Thereafter, the mixture is dried by the air flow at room temperature. The dried film is thermally set in an oven at 120°C for 10 minutes.
As described above, a polyolefin porous film body (9) having a film thickness of 20 μm is obtained.

[Comparative Example 2]

A separator is obtained in the same manner as in Example 2 except that the polyolefin porous film body (9) is used instead of the polyimide porous film body.

[Evaluation]

(Adhesive Strength)

The thus obtained separator and the negative electrode active material layer of the negative electrode (which is a laminate of the negative electrode current collector and the negative electrode active material layer) are superposed so as to be in contact with each other to prepare a laminated structure, and the obtained laminated structure is hot-pressed at 1 MPa in the thickness direction thereof at 80°C for 20 seconds.

Thereafter, the separator and the positive electrode are manually peeled off using tweezers, and the adhesive strength is evaluated in the following three steps. The results are shown in Table 1.

-Evaluation Criteria-

A: The positive electrode and the separator are peeled off with a strong force.
B: The positive electrode and the separator are peeled off with a slightly strong force.
C: The positive electrode and the separator are peeled off with a weak force.

(Lithium Dendrites and Cycle Properties)

Using the separator obtained as described above, a lithium ion secondary battery having the structure shown in FIGURE is prepared.
Adhesion of the separator and the positive electrode and the negative electrode is performed by hot pressing a laminated structure in which a positive electrode, a separator, and a negative electrode are laminated in this order at 5 MPa in a thickness direction at 80°C for 20 seconds.
The obtained secondary battery is repeatedly charged and discharged 600 times (1C charge and 1C discharge at 25°C), and the lithium precipitation state on the electrode surface and the reduction rate of the battery capacity are investigated.
It can be said that the smaller the lithium precipitation on the electrode surface, the better the lithium dendrite, and the smaller the reduction rate of the battery capacity, the better the cycle properties.
The results are shown in Table 1.

-Lithium Dendrite Evaluation Criteria-

A: The precipitation of lithium on the surface of the electrode is substantially eliminated, and a good state is maintained.
B: The precipitation of lithium on the surface of the electrode is observed, but is in a minor state.
C: A large amount of lithium is precipitated on the surface of the electrode.

-Cycle Evaluation Criteria-

A: The reduction rate of the battery capacity is less than 20%.
B: The reduction rate of the battery capacity is 20% or more and less than 40%.
C: The reduction rate of the battery capacity is 40% or more.

[Table 1]

| | | Example | | | | | | | | | | | | Comparative Example | |
|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 |
| Polyimide Porous Film Body or Polyolefin Porous Film Body | Type | (1) | (2) | (2) | (3) | (1) | (4) | (5) | (6) | (7) | (8) | (2) | (2) | (9) | (9) |
| | Porosity [%] | 74 | 74 | 74 | 74 | 74 | 76 | 71 | 72 | 40 | 55 | 74 | 74 | 42 | 42 |
| | Air Permeability [seconds/ 100mL] | 30 | 30 | 30 | 30 | 30 | 28 | 31 | 33 | 180 | 150 | 30 | 30 | 151 | 151 |
| | Average Pore Diameter X [μm] | 0.05 | 0.42 | 0.42 | 0.12 | 0.05 | 0.06 | 1.2 | 2.0 | 0.05 | 0.05 | 0.42 | 0.42 | 0.07 | 0.07 |
| Fluorine-containing resin particles | Type | PVDF1 | PTFE1 | PTFE2 | PTFE3 | PTFE3 | PTFE1 | PTFE3 | PTFE3 | PTFEI | PTFE1 | PTFE1 | PTFE1 | PVDF 1 | PTFE1 |
| | Average Particle Diameter Y [μm] | 0.1 | 0.2 | 5.0 | 8.0 | 8.0 | 0.2 | 8.0 | 8.0 | 0.2 | 0.2 | 0.2 | 0.2 | 0.1 | 0.2 |
| Ratio (Y/X) | | 2.0 | 0.48 | 11.9 | 66.7 | 160.0 | 3.3 | 6.7 | 4.0 | 4.0 | 4.0 | 0.48 | 0.48 | 1.4 | 2.9 |
| Surface Fluorine Atom Concentration [atm%] | | 23 | 21 | 19 | 18 | 18 | 20 | 18 | 18 | 20 | 21 | 10 | 30 | 23 | 21 |
| Water Contact Angle [°] | | 85 | 108 | 108 | 108 | 108 | 108 | 108 | 108 | 108 | 108 | 105 | 115 | 85 | 108 |
| Evaluation | Adhesive Strength | A | B | B | B | B | B | B | B | B | B | B | B | C | C |
| | Lithium Dendrites | A | A | A | A | B | A | A | A | A | A | B | A | C | C |
| | Cycle Properties | A | A | A | A | A | A | A | A | A | A | B | A | C | C |

From Table 1, it is also found that the polyolefin porous film (separator) of Examples has high adhesiveness to an electrode as an adhesion object, and generation of lithium dendrite is suppressed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments are chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. A polyimide porous film, comprising:

   a polyimide porous film body; and
   resin particles, the resin particles adhering to one surface or both surfaces of the polyimide porous film body, and containing a fluorine-based resin or containing a fluorine-based resin and an acrylic resin, wherein in a case where an average pore diameter of the polyimide porous film body is represented by X and an average particle diameter of the resin particles is represented by Y, a relationship of $X < Y$ is satisfied, wherein X and Y are measured in accordance with the description.

2. The polyimide porous film according to claim 1, wherein the fluorine-based resin is a polymer containing a vinylidene fluoride as a polymerization component.

3. The polyimide porous film according to claim 1 or 2, wherein a ratio Y/X of the average particle diameter Y of the resin particles to the average pore diameter X of the polyimide porous film body is more than 1 and equal to or less than 70.0.

4. The polyimide porous film according to any one of claims 1 to 3, wherein the average pore diameter X of the polyimide porous film body is 50 nm or more and 1500 nm or less.

5. The polyimide porous film according to any one of claims 1 to 4, wherein the average particle diameter Y of the resin particles is 5 nm or more and 10 μm or less.

6. The polyimide porous film according to any one of claims 1 to 5, wherein a porosity of the polyimide porous film body is 50% or more and 90% or less and is measured in accordance with the description.

7. The polyimide porous film according to any one of claims 1 to 6, wherein a fluorine atom concentration on the surface of the polyimide porous film body to which the resin particles is adhered is 5 atm% or more and 40 atm% or less and is measured in accordance with the description.

8. A non-aqueous secondary battery separator, comprising: the polyimide porous film according to any one of claims 1 to 7.

9. A secondary battery, comprising: an electrode; and the non-aqueous secondary battery separator according to claim 8, wherein an adhesive layer is formed between the electrode and the polyimide porous film body by the resin particles.

10. A method for manufacturing a secondary battery, comprising: bonding the non-aqueous secondary battery separator according to claim 8 and an electrode by the resin particles.

## Patentansprüche

1. Poröse Polyimid-Folie, umfassend:

   einen porösen Polyimid-Folienkörper; und
   Harzpartikel, die Harzpartikel an einer Oberfläche oder beiden Oberflächen des porösen Polyimid-Folienkörpers

haftend und ein Harz auf Fluorbasis enthaltend oder ein Harz auf Fluorbasis und ein Acrylharz enthaltend, wobei in einem Fall, in dem ein durchschnittlicher Porendurchmesser des porösen Polyimid-Folienkörpers durch X dargestellt ist und ein durchschnittlicher Partikeldurchmesser der Harzpartikel durch Y dargestellt ist, eine Beziehung X < Y erfüllt ist, wobei X und Y gemäß der Beschreibung gemessen werden.

2. Poröse Polyimid-Folie nach Anspruch 1, wobei das Harz auf Fluorbasis ein Polymer ist, das Vinylidenfluorid als Polymerisationskomponente enthält.

3. Poröse Polyimid-Folie nach Anspruch 1 oder 2, wobei ein Verhältnis Y/X des durchschnittlichen Partikeldurchmessers Y der Harzpartikel zum durchschnittlichen Porendurchmesser X des porösen Polyimid-Folienkörpers größer 1 und gleich oder kleiner 70,0 ist.

4. Poröse Polyimid-Folie nach einem der Ansprüche 1 bis 3, wobei der durchschnittliche Porendurchmesser X des porösen Polyimid-Folienkörpers 50 nm oder mehr und 1500 nm oder weniger beträgt.

5. Poröse Polyimid-Folie nach einem der Ansprüche 1 bis 4, wobei der durchschnittliche Partikeldurchmesser Y der Harzpartikel 5 nm oder mehr und 10 $\mu$m oder weniger beträgt.

6. Poröse Polyimid-Folie nach einem der Ansprüche 1 bis 5, wobei eine Porosität des porösen Polyimid-Folienkörpers 50 % oder mehr und 90 % oder weniger beträgt und gemäß der Beschreibung gemessen wird.

7. Poröse Polyimid-Folie nach einem der Ansprüche 1 bis 6, wobei eine Fluoratomkonzentration auf der Oberfläche des porösen Polyimid-Folienkörpers, an der die Harzpartikel haften, 5 Atom-% oder mehr und 40 Atom-% oder weniger beträgt und gemäß der Beschreibung gemessen wird.

8. Trenner für wasserfreie Sekundärbatterie, umfassend: die poröse Polyimid-Folie nach einem der Ansprüche 1 bis 7.

9. Sekundärbatterie, umfassend: eine Elektrode; und den Trenner für wasserfreie Sekundärbatterie nach Anspruch 8, wobei durch die Harzpartikel eine Klebeschicht zwischen der Elektrode und dem porösen Polyimid-Folienkörper gebildet wird.

10. Verfahren zur Herstellung einer Sekundärbatterie, umfassend: Bindung des Trenners für wasserfreie Sekundärbatterie nach Anspruch 8 und einer Elektrode durch die Harzpartikel.

## Revendications

1. Film poreux polyimide, comprenant :

   un corps de film poreux polyimide ; et
   des particules de résine, les particules de résine adhérant à une surface ou aux deux surfaces du corps de film poreux polyimide, et contenant une résine à base de fluor ou contenant une résine à base de fluor et une résine acrylique, dans lequel, dans le cas où un diamètre moyen des pores du corps de film poreux polyimide est représenté par X et un diamètre moyen de particule des particules de résine est représenté par Y, une relation X < Y est satisfaite, dans lequel X et Y sont mesurés conformément à la description.

2. Film poreux polyimide selon la revendication 1, dans lequel la résine à base de fluor est un polymère contenant un fluorure de vinylidène comme composant de polymérisation.

3. Film poreux polyimide selon la revendication 1 ou 2, dans lequel un rapport Y/X du diamètre moyen de particule Y des particules de résine au diamètre moyen des pores X du corps de film poreux polyimide est supérieur à 1 et égal ou inférieur à 70,0.

4. Film poreux polyimide selon l'une quelconque des revendications 1 à 3, dans lequel le diamètre moyen des pores X du corps de film poreux polyimide est de 50 nm ou plus et de 1 500 nm ou moins.

5. Film poreux polyimide selon l'une quelconque des revendications 1 à 4, dans lequel le diamètre moyen de particule Y des particules de résine est de 5 nm ou plus et de 10 $\mu$m ou moins.

6. Film poreux polyimide selon l'une quelconque des revendications 1 à 5, dans lequel une porosité du corps de film poreux polyimide est de 50 % ou plus et de 90 % ou moins et est mesurée conformément à la description.

7. Film poreux polyimide selon l'une quelconque des revendications 1 à 6, dans lequel une concentration en atomes de fluor sur la surface du corps de film poreux polyimide auquel les particules de résine adhèrent est de 5 % en atomes ou plus et de 40 % en atomes ou moins et est mesurée conformément à la description.

8. Séparateur de batterie secondaire non aqueuse, comprenant : le film poreux polyimide selon l'une quelconque des revendications 1 à 7.

9. Batterie secondaire, comprenant : une électrode ; et le séparateur de batterie secondaire non aqueuse selon la revendication 8, dans laquelle une couche adhésive est formée entre l'électrode et le corps de film poreux polyimide par les particules de résine.

10. Procédé de fabrication de batterie secondaire, comprenant : la liaison du séparateur de batterie secondaire non aqueuse selon la revendication 8 et d'une électrode par les particules de résine.

FIGURE

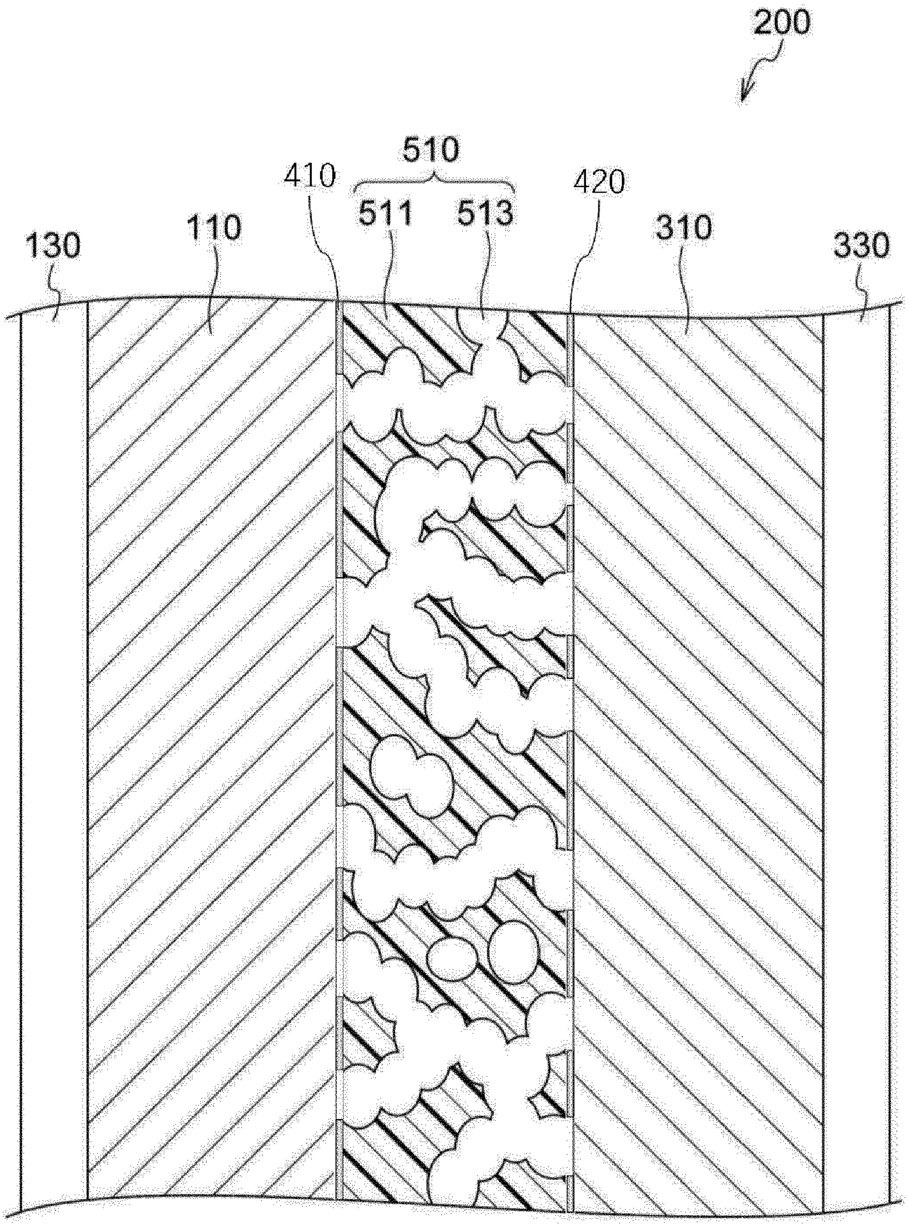

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017026485 A
- JP 3040757 B
- CN 207558901
- JP 5361557 B
- WO 2017107435 A1
- US 6306989 B1
- JP 2017127992 A
- JP 2017047655 A
- WO 2017170288 A